(19) Europäisches Patentamt
European Patent Office
Office européen des brevets

(11) **EP 2 842 067 B1**

(12) **EUROPEAN PATENT SPECIFICATION**

(45) Date of publication and mention
of the grant of the patent:
**02.08.2017 Bulletin 2017/31**

(51) Int Cl.:
*G06F 19/00* (2011.01)   *B64D 45/00* (2006.01)

(21) Application number: **12875400.9**

(22) Date of filing: **24.04.2012**

(86) International application number:
**PCT/US2012/034825**

(87) International publication number:
**WO 2013/162524 (31.10.2013 Gazette 2013/44)**

(54) **METHOD AND APPARATUS TO INCREASE AIRCRAFT MAXIMUM LANDING WEIGHT LIMITATION**

VERFAHREN UND VORRICHTUNG ZUR ERHÖHUNG DER BEGRENZUNG DES MAXIMALEN LANDUNGSGEWICHTS EINES FLUGZEUGS

PROCÉDÉ ET APPAREIL PERMETTANT D'AUGMENTER LA LIMITE DE MASSE MAXIMALE À L'ATTERRISSAGE D'UN AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2012 US 201213452996**

(43) Date of publication of application:
**04.03.2015 Bulletin 2015/10**

(73) Proprietor: **Nance, C. Kirk**
**Keller, TX 76248 (US)**

(72) Inventor: **Nance, C. Kirk**
**Keller, TX 76248 (US)**

(74) Representative: **Dennemeyer & Associates S.A.**
**Postfach 70 04 25**
**81304 München (DE)**

(56) References cited:
WO-A1-2006/130984     WO-A1-2009/153436
FR-A1- 2 894 045      US-A- 3 208 266
US-A- 6 012 001       US-A- 6 032 090
US-A- 6 032 090       US-A1- 2003 222 795
US-A1- 2007 124 034   US-A1- 2009 292 483
US-A1- 2010 161 174   US-B1- 8 042 765
US-B1- 8 042 765      US-B2- 7 356 483

- 'TRANSPORTATION SAFETYBOARD OF CANADA' AVIATION INVESTIGATION REPORT A10A0032 24 March 2010, XP055172617 Retrieved from the Internet: <URL:http://www.tsb.gc.ca/eng/rapports-reports/aviation/2010/a10a0032/a10a0032.pdf> [retrieved on 2012-07-03]
- 'B777 IOE & Training Reference Guide' 15 May 2011, XP008175352 Retrieved from the Internet: <URL:http://777cheatsheets.com/resources/B777 IOE Guide.pdf> [retrieved on 2012-07-03]
- 'CIVIL AERONAUTICS BOARD' CIVIL AIR REGULATIONS, PART 4B-AIRPLANE AIRWORTHINESS TRANSPORT CATEGORIES 31 December 1953, XP055173432 Retrieved from the Internet: <URL:http://www.theiplgroup.com/CAR-PART4b.pdf> [retrieved on 2012-07-03]

## Description

## BACKGROUND OF THE INVENTION

An aircraft is typically supported by plural pressurized landing gear struts. Designs of landing gear incorporate moving components which absorb the impact force of landing. Moving components of an aircraft landing gear shock absorber are commonly vertical telescopic elements. The telescopic shock absorber of landing gear comprise internal fluids, both hydraulic fluid and compressed nitrogen gas, and function to absorb the vertical descent forces generated when the aircraft lands.

The amount of force generated when an aircraft lands is a function of the aircraft weight at landing, and the vertical velocity at which that aircraft landing weight comes into initial contact with the ground. Aircraft have limitations regarding the maximum allowable force the aircraft landing gear and other supporting structures of the aircraft can safely absorb when the aircraft lands. Landing force limitations, which are often related to aircraft vertical velocity (sink-rate or sink-speed) at initial contact with the ground, are a key factor in determining the Maximum Landing Weight ("MLW") for aircraft. The MLW limitation is related to an assumed aircraft Vertical Velocity at initial contact with the Ground ("hereinafter referred to as: VVG").

Aircraft routinely depart from an airport with the aircraft weight less than the maximum take-off weight limitation, but greater than the maximum landing weight limitation. During the flight in-route fuel is consumed, which reduces the aircraft weight to a value below the maximum landing weight limitation. On average, passenger airlines dispatch about 28,537 flights per day. With this high volume of daily flights, situations such as medical emergencies or minor equipment malfunctions often arise where an aircraft has left the departure airport, and the pilot discovers the need to immediately return and land, without the time or opportunity to burn-off the planned in-route fuel. This causes an overweight landing event. When an overweight landing occurs, the Federal Aviation Administration (hereinafter referred to as "FAA") in accordance with the aircraft manufacturer recommendations, require the aircraft be removed from service and a manual inspection be performed to check for damage to the landing gear and the connection fittings of the landing gear to the aircraft.

Airlines must perform complex calculations of determining passenger weights, baggage weights and cargo weights; before each flight, to assure the aircraft' actual landing with is below the MLW limitation.

As an example: a domestic airline which operates the Embraer 145 aircraft had a flight departing from a Midwest airport. The flight was planned where passengers, bags and fuel were added to the aircraft, with the planned fuel burn having the aircraft landing with a weight just below the MLW limitation. Weather forecasts had the possibility of severe storms passing through the area of the destination airport. The pilot being concerned about the potential storms creating a need to delay the schedule arrival time, thus ordered an additional 1,000 lbs of "storm-fuel" to be added to the aircraft; to allow additional time to circle the destination city, and land after the potential storms had past. Prior to that departure, airline agents came aboard the aircraft and requested that 5 passengers be removed from the flight (each passenger having an assigned weight, including their carryon bags, as 200 lbs). The required removal of the 5 passengers was due to the possibility that the severe storms would not develop, nor pass through the destination airport; thus the aircraft would not need to burn-off the additional storm-fuel, which would have the arriving aircraft landing 1,000 lbs over the MLW limitations.

Because an overweight landing causes the aircraft to be removed from service for inspection, which severely disrupts the airline's planned operations, airlines work to avoid such events. As a result, aircraft operators will restrict the planned load, and an aircraft may take-off with un-used capacity. The weight carrying ability of the aircraft is thus limited, not by the maximum take-off weight limitation, but by the MLW limitation.

The landing weight is limited by FAA Regulation. In studying the regulation and its history, an important realization can be made.

The FAA is the Regulatory Authority which regulates the design, development, manufacture, modification and operation of all aircraft operated within the United States, and will be used along with the term "Regulatory Authority" to indicate both the FAA and/or any governmental organization (or designated entity) charged with the responsibility for either initial certification of aircraft or modifications to the certification. Examples of Regulatory Authorities would include: European Aviation Safety Agency "EASA", within most European countries; Transport Canada, Civil Aviation Directorate "TCCA", in Canada; Agência Nacional de Aviação Civil "ANAC" in Brazil; or other such respective Regulatory Authority within other such respective countries.

FAA Regulations (provided in the Code of Federal Regulations) are the governmental regulations which detail the requirements necessary for an aircraft to receive certification by the Regulatory Authority within the United States. These would be equivalent to such regulations within the Joint Aviation Regulations "JARs" which are used in many European countries.

Title 14 of the Code of Federal Regulations, Part 25 refers to regulations which control the certification of Air Transport Category aircraft "Part 25 aircraft". Part 25 aircraft include most of the commercial passenger aircraft in use today. For example, Part 25 aircraft includes Boeing model numbers 737, 747, 757, 767, 777; Airbus A300, A310, A320, A330, A340, etc.

In particular § 25.473(a) provides:

**Title 14 - Code of Federal Regulations:**

**Part 25 - Airworthiness Standards: Transport Category Airplanes**

**§ 25.473 Landing load conditions and assumptions.**

(a) For the landing conditions specified in §25.479 to §25.485 the airplane is assumed to contact the ground -

(1) In the attitudes defined in §25.479 and §25.481;

(2) With a limit descent velocity of 10 fps at the design landing weight (the maximum weight for landing conditions at maximum descent velocity); and

(3) With a limit descent velocity of 6 fps at the design take-off weight (the maximum weight for landing conditions at a reduced descent velocity).

(4) The prescribed descent velocities may be modified if it is shown that the airplane has design features that make it impossible to develop these velocities.

(emphasis provided: as to the underlined text)

Values described in the regulation and also herein, as they relate to vertical landing velocity, are expressed in feet per second "fps" and while these are typical values, they are used herein for example purposes only and are not limiting or restricting to the processes and methods described.

Chapter § 25.473(a) of the FAA Regulations define the assumption as to the "limit descent velocity" which is the maximum VVG an aircraft is assumed to experience, during a landing event. This assumption is 10 feet per second "10fps".

The current FAA rule evolved in the early Civil Aeronautics Board - Civil Air Regulations, Part 4b, § 4b.230 (b) dating back to November 9, 1945. The full text is provided herein as reference material, but the relevant text is in the final two paragraphs (i) and (ii).

**CIVIL AERONAUTICS BOARD**

**CIVIL AIR REGULATIONS**

**PART 4b - AIRPLANE AIRWORTHINESS TRANSPORT CATAGORIES**

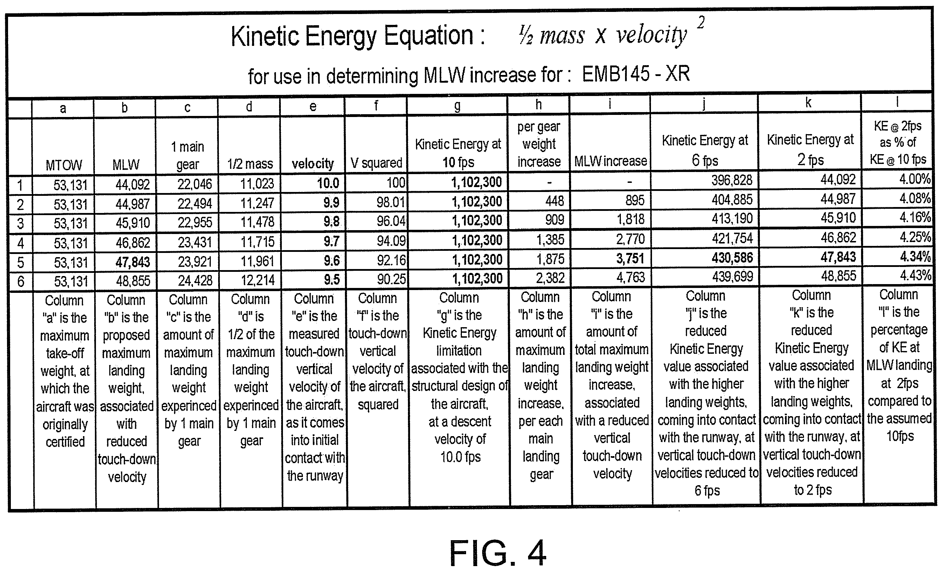

**§ 4b.230 General.** The limit loads obtained in the conditions specified in §§4b.321 through 4b.236 shall be considered as external forces applied to the airplane structure and shall place in equilibrium by linear and angular inertia forces in a rational or conservative manner. In applying the specific conditions the provisions of paragraph (a) of this section shall be complied with. In addition, for landing conditions of §§4b.321 through 4b.234 the airplane shall be assumed to be subject to forces and descent velocities prescribed in paragraph (b) of this section. (The basic landing gear dimensional data are given in figure 4b-7.)

**(a) Center of gravity positions.** The critical center of Gravity positions within the certification limits shall be selected so that the maximum design loads in each landing gear elements are obtained in the landing and ground handling conditions.

**(b) Load factors, descent velocities and design weights for landing conditions.** (1) In the landing conditions the limit vertical inertia load factors at the center of gravity of the airplane shall be chosen by the applicant, except that they shall not be less than the values which would be obtained when landing the airplane with the following limit descent velocities and weights:

(i) 10 f.p.s. at the design landing weight.
(ii) 6 f.p.s. at the design take-off weight.

Today an aircraft's MLW limitation is governed by these 66 year old regulatory assumptions, whereby an aircraft manufacturer must design and demonstrate the structural integrity of the aircraft and landing gear, to allow for the weight of that aircraft to land at MLW, with a VVG of 10 fps, with no damage to the aircraft.

Chapter § 25.473 also requires demonstration that the aircraft can safely landed at reduced VVG rates, which are assumed not to exceed 6fps, at the higher maximum takeoff weight "MTOW." This event is allowed only in emergency or non-scheduled events, and an overweight landing inspection is required immediately after such over-weight landing event. Though current regulations for aircraft design criteria acknowledge aircraft structural integrity to allow the aircraft to land at a weight greater than the originally certified MLW for that aircraft, with there being no active and operational system to accurately measure the VVG of those higher landing weight aircraft, there have been no justifications for the aviation Regulatory Authorities to allow for planned or scheduled landing events at the higher weights.

The previous paragraphs have the words "assumption" and "assumed" underlined. The FAA Regulations for the design criteria of Part 25 aircraft have the VVG of an aircraft as an assumed value, not as a measured value. This is a very important consideration, in the reasoning of the methods and strategies of this invention. There were no systems to measure aircraft VVG in 1945. From then, until today, there has been no justification basis provided to the FAA to modify the 10fps assumption. Various systems have been developed for use within the current scope of the 10fps requirements, but used only to better identify the extreme landing loads near, and in excess of 10fps, experienced during aircraft landing mishaps. These different systems are not being used as part of a combined apparatus and method to demonstrate a justification basis for the reduction of the aircraft limit descent velocity assumption, for determining a second higher aircraft MLW limitation.

When aircraft leave a manufacture's assembly facility, there are no assurances that all subsequent landing events will be soft or smooth. FAA Regulations historically take the approach of "plan for the worst and hope for the best", thus leaving the 10fps assumption still in effect today.

The determination of vertical velocity at the exact moment of initial contact with the ground is a critical factor in efforts to convince the Regulatory Authorities in requests for modifications in current regulations regarding sink-rate assumptions and further to allow for increase in MLW, as function of better determination of aircraft VVG.

This invention offers the utilization of novel apparatus to measure aircraft VVG, in support of the methods of this invention for an increase in the aircraft MLW limitation; in addition to this novel apparatus, according to preferred embodiments various prior art apparatus may be included to provide additional measurements in support of execution of the methods of the invention.

One preferred embodiment offers the utilization of U.S. Patent (Nance) # 7,274,309 which teaches the use of monitoring landing gear strut pressure, to further measure the collapse/compression rate of the telescopic landing gear strut. When this collapse rate of the telescopic landing gear is corrected as to vertical, it will identify the vertical sink-rate of the aircraft, at initial touchdown, at each respective landing gear. U.S. Patent (Nance) # 7,274,310 teaches the use of monitoring landing gear strut pressure, to measure the Kinetic Energy generated and dissipated by the aircraft landing gear, at initial touch-down, at each respective landing gear. The additional capability to measure the Kinetic Energy generated and dissipated at each landing gear strut, as opposed to the reliance on mere aircraft sink-rate assumptions, allows the justification for Regulatory Authorities to allow an increase in the aircraft MLW limitation.

Messier Dowty WO 2006/130984 discloses a system and method for determining when an aircraft experiences a hard landing. Various measurements such as landing attitudes and speeds are recorded during landing and compared against the design limits of the aircraft. This information can also be used to monitor aircraft operating at increased landing weights.

Holforty US Patent No. 2003/222795 discloses WAAS-enabled GPS systems to determine aircraft wake hazard zones.

Additional research of the prior art identifies numerous systems which measure whole aircraft descent velocity. Reference is made to U.S. Patent No. 3,712,1228 - Harris; U.S. Patent No. 6,012,001 - Scully, and U.S. Patent No. 4,979,154 - Brodeur. These and other patents describing similar but subtly different techniques teaching the use of various range-finder devices, attached to the aircraft hull, which measure the distance between the aircraft hull and the ground, as well as the rate of change of those measurements.

As a practical matter, obtaining accurate data on aircraft VVG, whether by monitoring the rate of landing gear strut compression, or by some other range-finder apparatus available through prior art, provides the pathway of seeking modification in the regulatory assumptions on sink-speed, which in turn would justify Part 25 aircraft to have MLW limitations increased. Although the assumption of 10fps in the design criteria of the existing regulations have been in effect for over 6 decades, recent data shows that the assumption provides a very large safety margin. The FAA William J. Hughes Technical Center (FAA's Research and Development Division, "FAA Tech Center") has made efforts to determine the rate of typical VVG landing events. Beginning in 1993 and running through 2008, the FAA Tech Center has completed multiple studies of aircraft landing parameters, including aircraft sink-speeds, at multiple airports located around the world, in efforts to accumulate more data regarding the landing events of daily airline operations. The FAA Tech Center survey used high-speed digital cameras, positioned at the "landing threshold zone" of the various airport runways and measure aircraft landing parameters for a large number of Part 25 aircraft. The most recent FAA Tech Center survey data, recorded during 2008, documents the "mean" or "average" VVG range, which is approximately 2fps. (VVG, as in the Tech Center report is referred to as "Sink Speed"). {http://www.tc.faa.gov/its/worldpac/techrpt/ar04-47.pdf}

The Regulatory Authorities have various practices to provide relief or modification to the regulatory requirements, such as:

- Equivalent Level of Safety
- Special Condition
- Exemption

This relief is normally granted by the Regulatory Authority, after demonstration and/or analysis of an alternate means of compliance, which verifies compliance with the intent of the regulation, without showing literal compliance to the regulation.

Another aspect of this invention is a method by which Part 25 aircraft are justified in receiving relief from the 10fps assumption, to a lower assumption whereby the MLW of that Part 25 aircraft may be increased and acknowledged by aviation Regulatory Authorities. One of the methods of this invention involves analysis of the FAA Tech Center landing survey data, combined with development and implementation of set of new daily operational requirements for the Part 25 aircraft; thus providing by either: a demonstration and/or analysis to substantiate, a finding of an "Equivalent Level of Safety" and/or "Special Condition".

The FAA defines and Equivalent Level of Safety (ELOS) as follows:

"Equivalent level of safety findings are made when literal compliance with a certification regulation cannot be shown and compensating factors exist which can be shown to provide an equivalent level of safety."

{http://rgl.faa.gov/Regulatory_and_Guidance_Library/rgELOS.nsf/}

The FAA issues a finding of ELOS during the process of certification, whether that be the initial certification of an aircraft, certifications of derivative aircraft the manufacturer may develop or when issuing a Supplemental Type Certificate for modifications to an aircraft type, developed by entities other than the manufacturer.

In the case of the methods of this invention, a demonstration of "literal compliance" with the regulatory design assumption (10 fps) cannot be shown, however the "compensating factors" which exist to substantiate the ELOS finding include:

- The incorporation of apparatus and methods to measure, record and display (or generate alerts) when defined VVG thresholds are exceeded and, one or more of the following additional elements:

  ▪ The Approved Flight Manual for the aircraft contains specific VVG limits with which the aircraft must apply and provides for compliance with the traditional 10 fps limiting landing weight, if the VVG measuring system is inoperative;
  ▪ Apparatus and methods for recording the VVG for all landings in support of a trend monitoring system to monitor the life "experience" of both the airframe and individual landing gear;
  ▪ Alerting to the flight deck crew after a landing in which the VVG exceeds one or more pre-defined thresholds and supported by corresponding log book entry and/or inspection requirements.

The FAA defines Special Condition as follows:

"A Special Condition is a rulemaking action that is specific to an aircraft type and often concerns the use of new technology that the Code of Federal Regulations does not yet address. Special Conditions are an integral part of the Certification Basis and give the manufacturer permission to build the aircraft, engine or propeller with additional capabilities not referred to in the regulations."

{http://rgl.faa.gov/Regulatory_and_Guidance_Library/rgSC.nsf/}

A Regulatory Authority may wish to approve such installation, use and regulatory relief from such a System, by the issuance of a Special Condition as an alternative to the granting approval established by an ELOS, based upon no regulatory requirement or definition of a System which measures VVG. Regardless of the regulatory approval path used, the System attributes would be the same.

## SUMMARY OF THE INVENTION

There is provided a method of operating an aircraft, as defined in independent claim 1, that can be summarised as the aircraft having a first maximum landing weight based upon a first assumed maximum descent velocity. Vertical velocities are obtained of the aircraft at initial contact of the aircraft with the ground during landing events. Based upon the obtained vertical velocities of the aircraft at initial contact with the ground, operating the aircraft at or below a second assumed maximum descent velocity while measuring and recording the vertical velocities of the aircraft at initial contact of the aircraft with the ground during subsequent landing events, the second assumed maximum descent velocity being less than the first assumed maximum descent velocity. Operating the aircraft at a second maximum landing weight based upon the second assumed maximum descent velocity.

In this aspect of the invention the step of measuring vertical velocities of the aircraft at initial contact of the aircraft with the ground during landing events further comprises the steps of:

a) providing a first accelerometer on the hull portion of the strut;
b) providing a second accelerometer on the tire portion of the strut;
c) measuring the acceleration of the hull portion with the first accelerometer as the aircraft lands;
d) measuring the acceleration of the tire portion with the second accelerometer as the aircraft lands;
e) comparing the acceleration of the hull portion with the acceleration of the tire portion; and
f) determining the descent velocity of the hull portion of the strut, at initial contact with the ground.

In accordance with a preferred embodiment, the second maximum landing weight is greater than the first maximum landing weight.

In accordance with a preferred embodiment, the step of obtaining vertical velocities of the aircraft at initial contact of the aircraft with the ground during landing events further comprises the step of measuring and recording the descent velocities of the aircraft at initial contact of the aircraft with the ground, during landing events.

In accordance with the invention, the aircraft has landing gear. Each landing gear comprises a telescopic strut which is capable of extension and compression. In a preferred embodiment, the step of measuring a vertical velocity of the aircraft at initial contact of the aircraft with the ground during subsequent landing events further comprises the steps of measuring the extension of the one of the telescopic struts before contact of the respective landing gear with the ground, measuring the extension of the one telescopic strut during initial contact of the respective landing gear with the ground; measuring the amount of changed extension of the one telescopic strut with respect to elapsed time; determining the rate of compression of the one telescopic strut; and determining the descent velocity of the aircraft portion of the one telescopic strut is determined by the increasing pressure within the strut, or by change in torque-link angle; which relates to the compression rate of the landing gear strut.

In accordance with another preferred embodiment, the step of measuring a vertical velocity of the aircraft at initial contact with the ground during subsequent landing events further comprises providing a rangefinder on the hull of the aircraft, the rangefinder directed down to the ground; measuring the distance to the ground of the aircraft over elapsed time before the landing gear makes initial contact with the ground; determining when the landing gear makes initial contact with the ground and determining the descent velocity of the aircraft at initial contact by the landing gear with the ground.

In accordance with another preferred embodiment, the step of measuring a vertical velocity of the aircraft at initial contact with the ground during subsequent landing events further comprises providing a accelerometer on the hull of the aircraft, measuring the acceleration of the aircraft hull over elapsed time before the landing gear makes initial contact with the ground; determining when the landing gear makes initial contact with the ground; and determining the descent velocity of the aircraft at initial contact by the landing gear with the ground.

In accordance with still another preferred embodiment, the step of measuring a vertical velocity of the aircraft at initial contact with the ground during subsequent landing events further comprises providing a global positioning system receiver on the aircraft; measuring the location of the aircraft hull above the ground over elapsed time before the landing gear makes initial contact with the ground; determining when the landing gear makes initial contact with the ground; and determining the descent velocity of the aircraft at initial contact by the landing gear with the ground.

In accordance with another preferred embodiment, the first assumed maximum descent velocity is 10 fps.

In accordance with another preferred embodiment, the step of operating the aircraft at a second assumed maximum descent velocity that is less than 10 fps further comprises the step of operating the aircraft at or below a second assumed maximum descent velocity of 9.8 fps.

In accordance with another preferred embodiment, the step of operating the aircraft at a second assumed maximum descent velocity that is less than 10 fps further comprises the step of operating the aircraft at or below a second assumed maximum descent velocity of 9.6 fps.

In accordance with another preferred embodiment, the step of operating the aircraft at a second assumed maximum descent velocity that is less than 10 fps further comprises the steps of measuring and recording the vertical velocity of the aircraft at initial contact of the aircraft with the ground during a landing event, determining if the vertical velocity exceeds a predetermined threshold, and if the vertical velocity exceeds a predetermined threshold, then inspecting the aircraft before resuming flight operations.

There is also provided a method of operating an aircraft according to independent claim 12, which can be summarised as the aircraft having a maximum landing weight based upon a first assumed maximum descent velocity. The descent velocities of the aircraft at initial contact of the aircraft with the ground, during landing events are measured and recorded. Determining if a measured descent velocity of the aircraft at initial contact with the ground exceeds a predetermined threshold. Inspecting the aircraft, upon determining if the measured descent velocity exceeds the predetermined threshold. Operating the aircraft at a second assumed maximum descent velocity that is less than the first assumed maximum descent velocity. Operating the aircraft at a second maximum landing weight that is greater than the first maximum landing weight, based upon the second assumed maximum descent velocity.

In this aspect of the invention as well, the step of measuring vertical velocities of the aircraft at initial contact of the aircraft with the ground during landing events further comprises the steps of:

    a) providing a first accelerometer on the hull portion of the strut;
    b) providing a second accelerometer on the tire portion of the strut;
    c) measuring the acceleration of the hull portion with the first accelerometer as the aircraft lands;
    d) measuring the acceleration of the tire portion with the second accelerometer as the aircraft lands;
    e) comparing the acceleration of the hull portion with the acceleration of the tire portion; and
    f) determining the descent velocity of the hull portion of the strut, at initial contact with the ground. In accordance with a preferred embodiment, the aircraft has landing gear, each landing gear comprising a telescopic strut which is capable of extension and compression, the step of measuring a vertical velocity of the aircraft at initial contact of the aircraft with the ground during a landing event further comprises the steps of measuring the extension of the one of the telescopic struts before contact of the respective landing gear with the ground, measuring the extension of the one telescopic strut during initial contact of the respective landing gear with the ground, measuring the amount of changed extension of the one telescopic strut with respect to elapsed time, determining the rate of compression of the one telescopic strut, and determining the descent velocity of the aircraft portion of the one telescopic strut.

In accordance with a preferred embodiment, the step of measuring the descent velocity of the aircraft at initial contact with the ground during landing events further comprises providing a rangefinder on the hull of the aircraft, the rangefinder directed down to the ground; measuring the distance to the ground of the aircraft over elapsed time before the landing gear makes initial contact with the ground; determining when the landing gear makes initial contact with the ground; and determining the descent velocity of the aircraft at initial contact by the landing gear with the ground.

In accordance with a preferred embodiment, the step of measuring the descent velocity of the aircraft at initial contact with the ground during landing events further comprises providing an accelerometer of the hull of the aircraft; measuring the acceleration of the aircraft hull over elapsed time before the landing gear makes initial contact with the ground; determining when the landing gear makes initial contact with the ground; and determining the descent velocity of the aircraft at initial contact by the landing gear with the ground.

In accordance with a preferred embodiment, the step of measuring the descent velocity of the aircraft at initial contact with the ground during landing events further comprises providing a global positioning system receiver on the aircraft; measuring the location of the aircraft hull above the ground over elapsed time before the landing gear makes initial contact with the ground; determining when the landing gear makes initial contact with the ground; and determining the descent velocity of the aircraft at initial contact by the landing gear with the ground.

In a third aspect as defined in independent claim 17 and claims dependent thereon, apparatus is provided in support of the above methods.

**BRIEF DESCRIPTION OF THE DRAWINGS**

Although the features of this invention, which are considered to be novel, are expressed in the appended claims, further details as to preferred practices and as to the further objects and features thereof may be most readily comprehended through reference to the following description when taken in connection with the accompanying drawings, wherein:

FIG. 1 is a side view of a typical transport category aircraft with nose and main landing gear deployed.
FIGS. 2a, 2b, and 2c are views of a transport category aircraft showing respectively: on final approach descending towards the ground; executing a proper flare procedure to reduce vertical velocity prior to initial contact with the ground; and making "initial contact" with the ground.

FIG. 3 is "Table 2, page 10" taken from DOT/FAA/AR-08/12 : VIDEO LANDING PARAMETER SURVEYS - CINNICINATI / NORTHER KENTUCKY AND ATLANTIC CITY INTERNATION AIRPORTS, being the FAA Tech Center Survey Data comparing aircraft landing parameters, illustrating in particular: Average Sink Speed - for various aircraft models.

FIG. 4 is a table showing an example of the relationships of reduced vertical velocity assumptions to increasing aircraft MLW "maximum landing weight" limitations.

FIGS. 5a, 5b and 5c are sequential side views of a vertical telescopic landing gear strut, shown with various amounts of compression, both a pre-touchdown fully extended posture, then post-touchdown initially compressed posture, as compared to elapsed time; with illustrations of Software Program "Alpha" - landing gear pressure monitoring, and Software Program "Beta" - landing gear compression rate monitoring.

FIGS. 6a, 6b and 6c are sequential side views of an alternate design for aircraft landing gear strut, shown with various amounts of compression, both a pre-touchdown fully extended posture then post-touchdown initially compressed posture, as compared to elapsed time; with illustrations of Software Program "Gamma" - torque-link angle monitoring, and Software Program "Delta" - landing gear trailing arm strut compression rate monitoring.

FIGS. 7a and 7b are an illustration of Software Program "Epsilon" - aircraft hull angle correction to horizontal, which uses inclinometer data to correct rate of strut compression calculations for non-level aircraft angle.

FIGS. 8a, and 8b are an illustration of Software Program "Zeta" - aircraft Vertical Velocity at initial contact with the Ground "VVG", threshold and exceedance determination.

FIG. 9 is an apparatus block diagram illustrating the computer, various Software Programs; with inputs from pressure sensors, rotation sensors and inclinometer of the present invention, in accordance with a preferred embodiment.

FIG. 10 is a view of a process design flow chart for a "Method of Obtaining Modification to Limit Descent Velocity Assumptions.

FIG. 11 is a view of a process design flow chart for a "Method of Obtaining and Implementing Increased Maximum Landing Weight" for aircraft.

FIG. 12 is view of a process design flow chart, for required post-landing actions, to be followed by aircraft Flight Crew and Maintenance Control personnel, upon observance of measurement indications, from sink speed measuring system.

## DETAILED DESCRIPTION OF THE

## PREFERRED EMBODIMENT

The present invention creates a "justification basis" for a Regulatory Authority to allow for a reduction in the current regulatory assumptions of aircraft sink-speed or VVG, by use of measured VVG, to further allow an increase in the MLW limitation of the aircraft. The present invention incorporates devices which measure and determine aircraft sink-speed through various methods including the compression rate experienced by each landing gear strut on initial contact with the ground. The strut is monitored for compression so as to confirm that the aircraft has come into contact with the ground and also to determine the rate of strut compression and the aircraft vertical descent velocity or VVG.

The present invention detects initial and continued compression of the landing gear strut prior to initial contact with the ground; as well as throughout the remainder of the landing event. Measurements of vertical compression are monitored at a very rapid rate and are stored within a computer which is part of the system.

The present invention works with various types of telescopic strut designs, including true vertical strut designs, as well as trailing arm strut designs. The rate of strut compression corrected for aircraft hull inclination to horizontal, is the vertical velocity of the aircraft as it comes into initial contact with the ground.

The trailing arm landing gear has a different design than the vertical strut design. The trailing arm design forms a triangle with the three sides consisting of: a primary vertical strut body, a hinged trailing arm and a telescopic shock absorber. As the hinged trailing arm of landing gear rotates during strut compression, the opposing side of the hinged angle is a telescopic shock absorber, which will become shorter; changing the geometry of the triangle. The changing geometry, measured against elapsed time, will determine the vertical compression rate of the trailing arm landing gear design. The detection and rate of landing gear strut movement are determined during the initial contact of the landing gear with the ground. Upon detection of the initial movement of a respective landing gear strut, the step of monitoring the rate and amount of additional strut compression is used to determine the initial touch-down and VVG for each respective landing gear strut.

This invention provides methods of identifying, defining and illustrating various means of justification for Aviation Regulatory Authorities to allow for modifications to the design criteria regulations for transport category aircraft. The methods described herein develop various strategies for the justification of reductions to assumed limit descent velocity design criteria, from the current value of 10fps, along with the related increase in the aircraft MLW limitation.

Use of apparatus which measure aircraft VVG, along with the use of methods and strategies for the review, analysis and documentation of FAA Regulations and FAA Tech Center aircraft sink-speed survey data which illustrate current Part 25 Chapter § 25.473 limit descent velocity assumptions being more than adequate, creates operational procedures safer than what would be considered an Equivalent Level of Safety. Current Part 25 aircraft operational procedures provide no means for actual measurement and display of aircraft VVG to the aircraft flight crew, where this new invention offers methods of using measured VVG to allow for reduction to Part 25 Chapter § 25.473 limit descent velocity assumptions, and the associated increase in aircraft MLW. The methods of this new invention further develop strategies for new requirements, for implementation of operational procedures to assure Regulatory Authorities; that allowing a reduction in the limit descent velocity assumption with its subsequent increase in Part 25 aircraft MLW, will offer an Equivalent Level of Safety, and an alternative means of regulatory compliance.

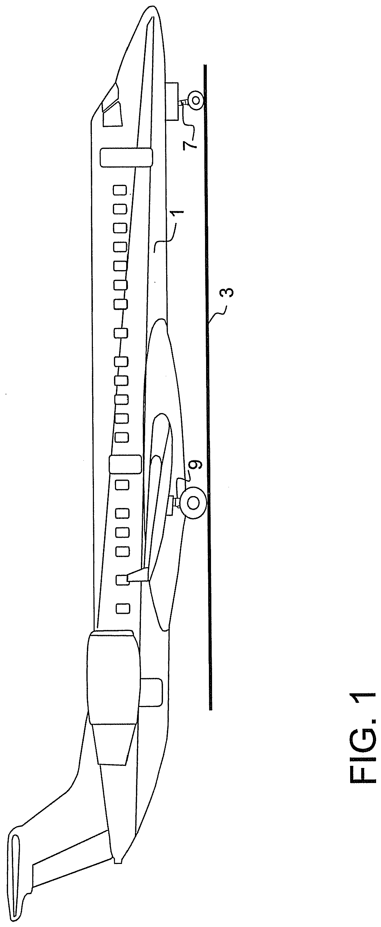

Referring now to the drawings, wherein like reference numerals designate corresponding parts throughout the several views and more particularly to FIG. 1 thereof, there is shown a typical transport category aircraft 1, resting on the ground 3, supported by as shown, one of the plural main landing gear 9, and a single nose landing gear 7.

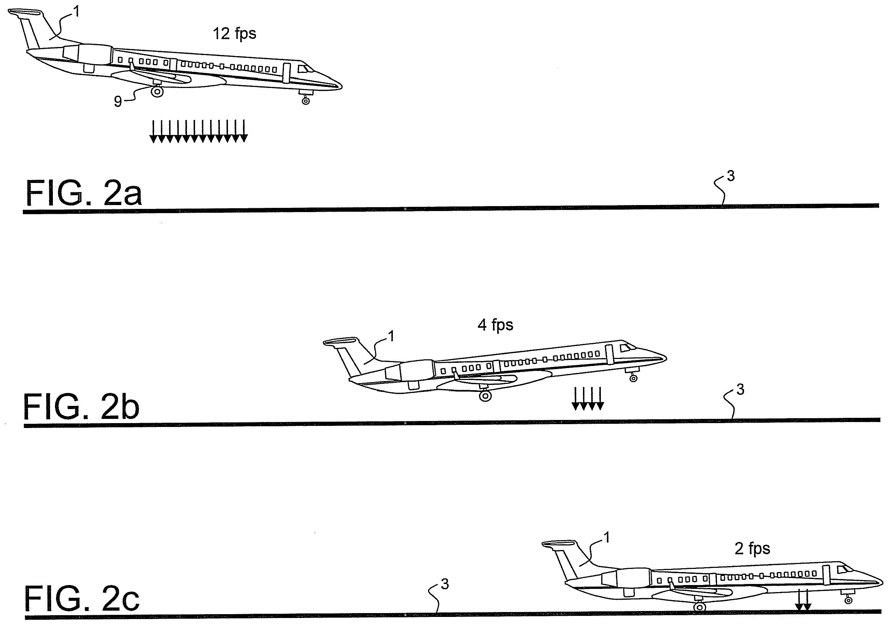

Referring now to FIG. 2a there is shown the transport category aircraft 1 in a typical landing approach posture, as it descends toward the ground 3. Deployed from the lower body of aircraft 1, are main landing gear 9. Main landing gear 9 absorbs the initial landing forces as aircraft 1 come into initial contact with the ground 3. Each of the downward pointing arrows (↓) represents the equivalent of 1fps. This initial aircraft shown has a total of twelve ↓ and represents the aircraft descending at 12fps.

Referring now to FIG. 2b there is shown the transport category aircraft 1 as it executes a flare procedure. The nose of the aircraft is brought to a higher angle of attack which brings the aircraft closer to a stall configuration, which helps reduce aircraft 1 horizontal speed as well as the rate of vertical descent. The flare procedure is executed to quickly reduce the aircraft vertical descent velocity. Upon execution of the flare procedure the aircraft now shows a total of four ↓ and represents the aircraft's reduced vertical velocity and descending towards the ground at 4fps.

Referring now to FIG 2c there is shown the transport category aircraft 1 as it comes into initial contact with the ground 3. After successfully completing the flare procedure (as shown in FIG 2b), aircraft 1 has reduced its horizontal velocity as well as the vertical descent velocity and in this example, gently comes into contact with the ground 3 at a vertical descent rate of 2fps. Though the aircraft has come into initial contact with the ground, until the total weight of the aircraft has become totally supported by the compressing landing gear 9; the VVG of aircraft 1 will continue to decrease until such time as the vertical velocity becomes zero, being at some point after the aircraft has come into initial contact with the ground.

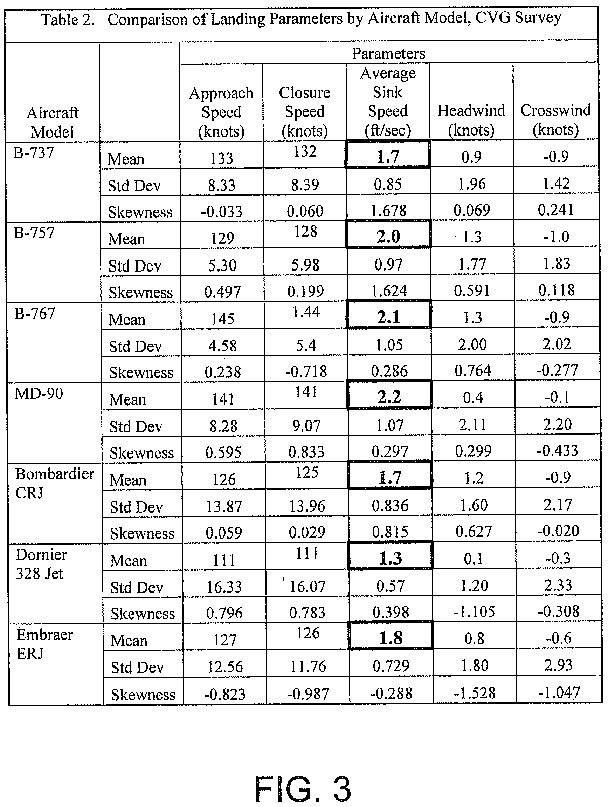

Referring now to FIG. 3, there is shown Table 2, page 10, from DOT/FAA/AR-08/12 VIDEO LANDING PARAMETER SURVEYS - CINNICINATI / NORTHERN KENTUCKY AND ATLANTIC CITY INTERNATION AIRPORTS - Comparison of Landing Parameters by Aircraft Model, CVG Survey.

Beginning in 1993, the FAA William F. Hughes Technical Center initiated a series of surveys which measured aircraft landing parameters at various airports around the world. There were a total of ten surveys completed: Atlantic City 1993, John F. Kennedy International 1997, Washington National 1999, Honolulu International 2001, London City Airport 2004, Philadelphia International 2004, Atlantic City International 2004, London Heathrow 2007, Atlantic City International 2008, and Cincinnati Airport 2008. Data shown herein is from the most recent 2008 survey data recorded at the Cincinnati Airport and shows various aircraft average sink-speeds with the "Mean" (shown in bold) ranging from 1.3fps to 2.2fps.

The average range near 2fps is far lower than the Regulatory Authorities 10fps assumptions, as defined in Part 25 aircraft design criteria. The "Average Sink Speed" parameters reveal larger aircraft have tendencies to land at slightly higher sink speed than smaller aircraft. But regardless of the size of the aircraft, no aircraft in the survey showed an average sink speed near a range of 6fps (which allows aircraft to land up to the much higher maximum take-off weight) or the assumed 10fps limitation used for determining aircraft maximum landing weight.

Referring now to FIG. 4 there is shown a table illustrating the relationship between aircraft vertical velocity at initial contact with the ground "VVG", as compared to aircraft landing weight. Aircraft landing weight and the vertical velocity at which that weight comes into initial contact with the ground, are the primary factors for the Part 25 aircraft design criteria and are used to determine the Kinetic Energy at touchdown. A typical expression of Kinetic Energy "KE" is "one-half the mass times the velocity squared":

$$KE = \tfrac{1}{2}\, Mass \, x \, Velocity^2$$

The calculations contained herein are that for a typical Part 25 transport category aircraft. Used as an example is the Brazilian manufactured Embraer EMB 145-XR. The design maximum take-off weight "MTOW" for the EMB 145-XR is 53,131 pounds and is indicated in Column a, Row 1. The MTOW value remains unchanged in Column a, throughout Rows 1-6.

In further illustration of this matrix, and defining the values horizontally across Columns b through g, within Row 1 are as follows:

Column b is the "original" design landing weight limitation of the EMB 145-XR aircraft, and is 44,092 pounds. Column c is 22,046 pounds, which is ½ of the amount of Column b which represents the weight (or mass) supported by one of the two main landing gear, which absorb the aircraft's initial landing impact. Column d is 11,023 pounds, which is ½ of the amount of Column c, to correspond to the "½ Mass" segment of the KE equation. Column e is the "assumed vertical velocity" of the aircraft, as it comes into initial contact with the ground "VVG." As a starting point for the calculations of this matrix, the Column e, Row 1 amount is equal to the Part 25 aircraft limit descent assumption of 10fps. Column f is the squared amount of an assumed but subsequently "measured" vertical velocity of the respective velocity value of Column e. Multiplying the "½ Mass" value shown in Row 1 Column d, times the velocity squared value in Row 1 Column f, generates Row 1 Column g; being a Kinetic Energy value of 1,102,300. This Kinetic Energy value in Column g represents the aircraft manufacturer's originally designed structural integrity, associated with the EMB 145-XR aircraft, based upon the 10fps assumption and the value associated with the determination of the aircraft MLW limitation shown in Row 1 Column b.

Looking down Column g, through Rows 2-6, the 1,102,300 Kinetic Energy value shall remain unchanged. Keeping the 1,102,300 value a "constant" throughout the lower Rows of the matrix insures the manufacturer's original design structural integrity will not be exceeded. Maintaining the 1,102,300 Column g value and reversing through the Kinetic Energy equation, using lower vertical velocity values within Column e Rows 2-6, allows for determination and illustration of the increased aircraft landing weights, as shown in Column b, Rows 2-6, associated with the lower VVG assumptions.

In continuation as a further example: across Row 5, wherein vertical velocity in Column e is reduced to 9.6fps, (and averting any exceedance of the 1,102,300 KE value shown in Column g), the MLW limitation is now determined by solving for mass in the equation: 1,102,300 = ½ (mass) x (9.6)². The mass (MLW) is now 47,843, which is an increase in the aircraft design landing weight of 3,751 pounds, as shown in Column i.

With the installation and use of apparatus which measure the compression rate of the aircraft landing gear, and the methods and strategies of this invention, Column e being the VVG will now become a "measured" vertical velocity. The elimination of having to rely on assumptions of VVG, can now be replaced with measured VVG.

Column h, Rows 2-6 are the values for additional amounts of landing weight, being associated with respective reduced vertical velocity, for a single landing gear strut; and Column i, Rows 2-6 are those respective values multiplied by two, accounting for both main landing gear, for the total increase in landing weight, associated with reduced vertical velocity for the entire aircraft. As shown in Columns e and i, as the assumed touchdown vertical velocity decreases slightly from 10fps to 9.9, the MLW increases by 895 pounds. As the touchdown vertical velocity decreases even more, the MLW increases (e.g. for 9.5fps, MLW increases by 4,763 pounds).

Thus reducing the assumed, but now measured touchdown vertical velocity allows more weight (passengers, cargo, fuel, etc.) to be carried by the aircraft.

Column j Rows 1-6, are the calculations of the respective Kinetic Energy values associated with even further reduced descent velocity (for example: at a constant 6fps) when calculated by the respective increasing landing weights values of Column b, Rows 1-6. Considering all of the values in Column j are below 440,000 and the original design structural integrity of the EMB 145-XR is a value of 1,102,300, there is strong justification that landing events at velocities below 6fps do not come near to approaching the original design structural integrity of the aircraft. This reinforces the justification that requirement of "post landing" aircraft inspections with measured VVG values of 6fps or greater offer a Superior Level of Safety than landing events without VVG measurement or detection, which might possibly allow a damage aircraft to remain in operation without inspection.

The table illustrates the striking evidence that reductions in vertical velocity, as a function of the velocity value squared, sharply reduces the Kinetic Energy values. Column k equates to the Kinetic Energy values associated with a much lower 2fps assumption, that being shown in Column 1, and is less than 4.50% of the original aircraft structural design values.

Regulatory Authorities require only the demonstration of an Equivalent Level of Safety, when asking for modifications in certification rules. Use of apparatus and methods of this invention offer a Superior Level of Safety.

By means of the use of an "inverse argument" one can best illustrate the reasoning of this Superior Level of Safety, with a hypothetical situation: suppose Regulatory Authorities have previously allowed relief in the design criteria VVG assumption from 10fps to 9.6fps, with the requirement that all landing events be measured; the Regulatory Authorities would surely become comfortable that aircraft landing events would be no longer subject to mere assumptions, but assured by the fact that all subsequent landing events were verified with actual measured VVG data. Supposing the Regulatory Authorities were then given the opportunity to undo the design criteria relief, back to 10fps, with the condition that no further landing events would be verified by measured data. The Regulatory Authorities would assuredly deny any such request to remove equipment from the aircraft that provides safety information, to then rely only on mere assumptions. This is the primary argument for justification that aircraft design criteria assumptions of 9.6fps with "measured" VVG data, is an Equivalent Level of Safety, to that of 10fps assumptions, with "no measured" VVG data.

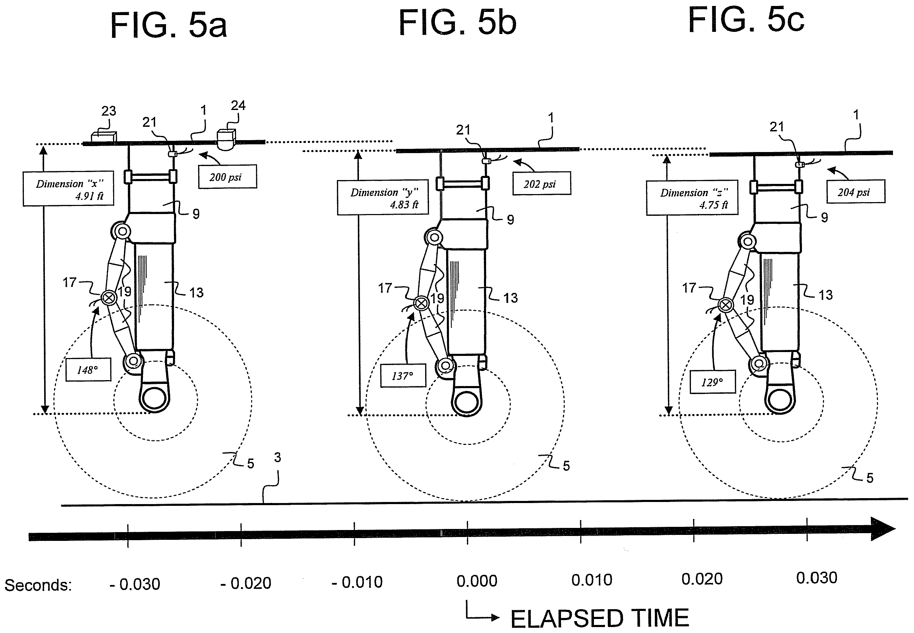

Referring now to FIGS. 5a, 5b and 5c; there are shown two separate, but potentially complimentary, versions of the apparatus of the invention for justifying an increase in aircraft MLW, which measure the compression rate of a "vertical, telescopic" landing gear design. Additionally, an illustration of Software Program "Alpha", where initial touch-down determination and landing gear compression is measured to determine when the aircraft has come into initial contact with the ground; and illustration of Software Program "Beta", where determination of landing gear compression, measured against elapsed time is used to determine aircraft vertical velocity at initial contact with the ground, being the aircraft "VVG".

Illustrated across the bottom through FIGS. 5a, 5b and 5c is an arrow extending from left to right. This arrow represents ELAPSED TIME. The vertical lines on the arrow divide ELAPSED TIME into increments of 10/1,000th of a second. ELAPSED TIME begins at the initial contact with the ground and extends to the completion of a landing event. Prior to the initial contact with the ground, ELAPSED TIME is illustrated in negative numbers, counting down to initial contact with the ground.

Shown by FIGS. 5a, 5b and 5c is a sequence of views of a "vertical telescopic" aircraft main landing gear 9, as would be deployed from an aircraft hull 1. When the landing gear 9 is deployed from within aircraft hull 1 and locked into place, prior to the landing event; the body of landing gear 9 maintains a fixed position in relation to aircraft hull 1. In a preferred embodiment of the invention the working pressure within landing gear 9 is continually monitored and measured by a pressure sensor 21. Landing gear strut 9 incorporates a telescopic piston 13. The rate of telescopic compression of landing gear 9 is proportional to the reduced internal volume as piston 13 compresses into strut 9. Internal strut volume is proportional to internal strut pressure. Increased strut pressure is proportional to reduced strut volume. Monitoring increases in strut 9 internal pressure by pressure sensor 21 as compared to elapsed time, allows for the monitoring and measuring the "compression rate" of strut 9. The rate of compression of strut 9 is the collapse rate of strut 9. The collapse rate of strut 9, corrected as to vertical, is the VVG - vertical velocity of the aircraft, as it comes into initial contact with the ground. The rate of telescopic compression of the landing gear strut 9 is also measured by the monitoring the changes in angle of the landing gear torque-link mechanism 19. The torque-link 19 is sometimes referred to as a scissor-link and functions to prevent the rotation of piston 13 within landing gear strut 9. A rotation sensor 17 is mounted at the hinge-point of torque-link 19, to measure the changing angles of the opposing arms of torque-link 19, as piston 13 compresses within strut 9. Changes in the angle at the hinge-point of the opposing arms of torque-link 19, measured by rotation sensor 17, are proportional to the rate of compression of piston 13 within landing gear strut 9.

FIG. 5a shows aircraft 1 with a deployed main landing gear 9, which includes a telescopic piston 13, and rubber tire 5 (tire 5 shown as dashed lines). Landing gear 9 is above the ground 3, while the aircraft is still in flight, with no weight being supported by landing gear 9. Landing gear 9 contains internally both a non-compressible fluid (such as hydraulic oil) and a compressible gas (such as nitrogen). As telescopic landing gear 9 compresses at initial contact with the ground 3, the volume and dimensional length of landing gear 9, with telescopic piston 13, will change. The internal pressure of the compressible nitrogen gas within telescopic landing gear 9 will increase in direct proportion to the reduced gas volume within landing gear 9. This is attributed to Boyle's Gas Law, "pressure has a proportional relationship to volume."

For landing gear 9 to function at its maximum effectiveness, it is important that telescopic piston 13 be extended to its full telescopic limits, prior to the aircraft landing. While aircraft 1 is above the ground 3 and the landing gear 9 is supporting no weight, landing gear 9 maintains what is commonly referred to as a "pre-charge pressure." This pre-charge pressure is a relatively low pressure, but of a sufficient amount of pressure to force the telescopic feature of strut piston 13 to maintain its full extension limits, while bearing no weight. With strut piston 13 at full extension, landing gear 9 is capable of absorbing the maximum design landing load limits for aircraft 1.

As tire 5 comes into contact with the ground 3 (Fig. 5b), the pressure within landing gear 9 will increase in direct proportion to the decreased internal volume of landing gear 9. As an example: shown in FIG 5a, the pre-charge pressure within telescopic landing gear 9 is 200psi. (As additional reference: when a fully loaded aircraft is resting on its plural landing gear, and the landing gear are at near full compression, the loads on a typical main landing gear can generate internal pressure up to 1,800psi)

FIG. 5a shows the landing gear 9 before initial touchdown with the ground 3, with the fully extended piston 13 illustrated by a Dimension "x" measured at 4.91 feet, with a pre-charge pressure of 200 psi, and a torque-link 19 angle of 148° as measured by rotation sensor 17. Dimension "x" in this example is the distance measured from the lower portion of the aircraft hull 1 to the lowest point on strut piston 13. Alternate locations can be used for determining the Dimension "x" measurement, as long as the opposing locations are selected from the fixed structure of landing gear 9 or aircraft 1, and compared to a location on the opposing portion of piston 13, which telescopically travels in relation to the fixed components.

FIG. 5b shows the landing gear 9 at initial touchdown, with a partially compressed piston 13, illustrated by a Dimension "y" measured at 4.83 feet, with a slightly higher pressure of 202 psi, and a torque-link 19 angle as measured by rotation senor 17, of 137°. Software Program "Alpha" recognizes any increase in strut pressure from the 200psi pre-charge pressure, will identify the aircraft landing gear 9 has come into initial contact with the ground 3. Software Program "Gamma" recognizes any decrease in torque-link angle from the 148° associated with full extension of the telescopic strut 9, will identify the aircraft landing gear 9 has come into initial contact with the ground 3.

FIG. 5c shows the landing gear 9 compressing further after initial touchdown with ground 3, with a further compressed piston 13, illustrated by a Dimension "z" measured at 4.75 feet, with an even higher pressure of 204 psi, and a torque-link 19 angle as measured by rotation sensor 17, of 129°. Software Program "Delta" recognizes the increase in strut pressure from the 200psi pre-charge pressure to 202psi, with further increase in strut pressure to 204psi, as measured against elapsed time, and allows for the determination of VVG, at this respective landing gear strut 9. Software Program "Delta" recognizes the decrease in torque-link angle from the 148° associated with full extension of the telescopic strut 9 to 137°, with further decrease in torque-link angle to 129°, as measured against elapsed time, and allows for the determination of VVG, at this respective landing gear strut 9.

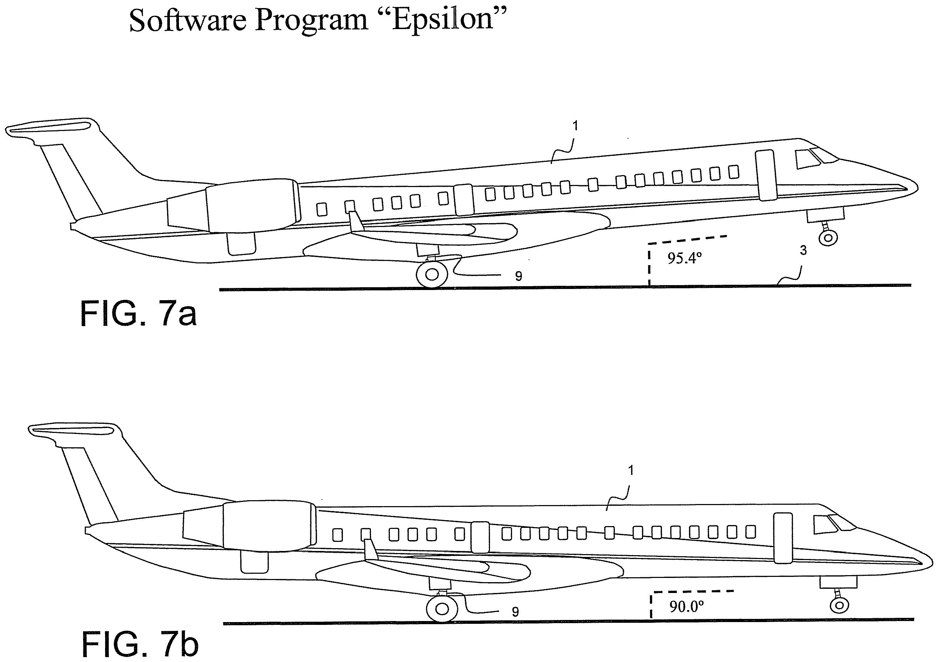

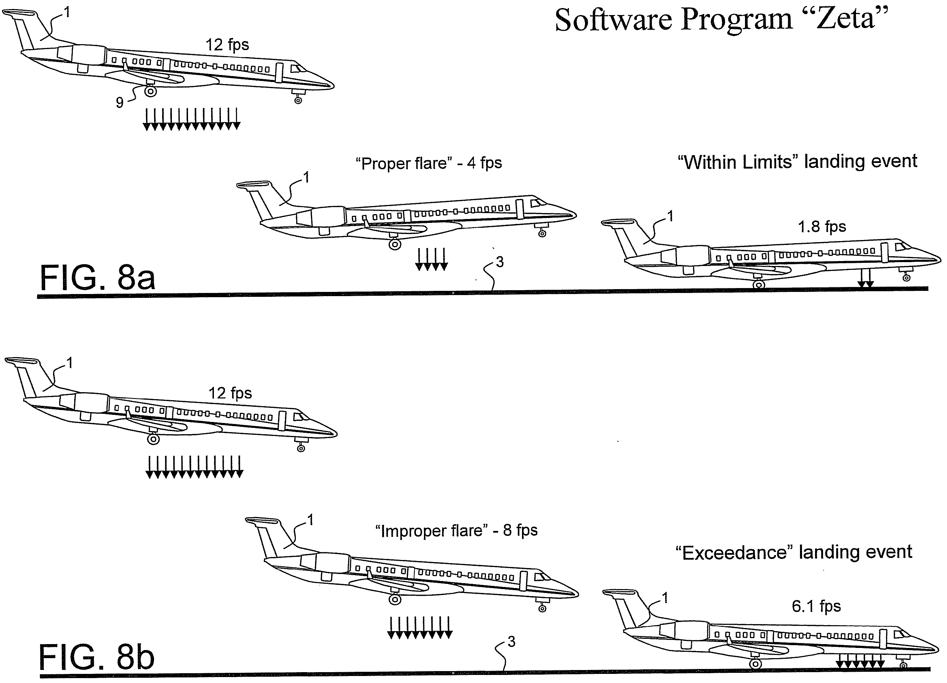

ELAPSED TIME is monitored by an internal clock, located within the system's computer 25 (see FIG. 8). Attached to aircraft hull 1 is inclinometer 23. Inclinometer 23 measures aircraft hull 1 angle, in particular aircraft 1 relationship to horizontal, during the landing event. As tire 5 of landing gear 9 comes into contact with the ground 3; if aircraft hull 1 is not horizontal, having landing gear 9 in a non-vertical position; measurements from inclinometer 23 are used to correct any non-horizontal angle of aircraft 1, and correct the calculations of the compression rate of the non-vertical landing gear 9, to that of landing gear 9 being vertical (more fully described in FIGS. 7a and 7b).

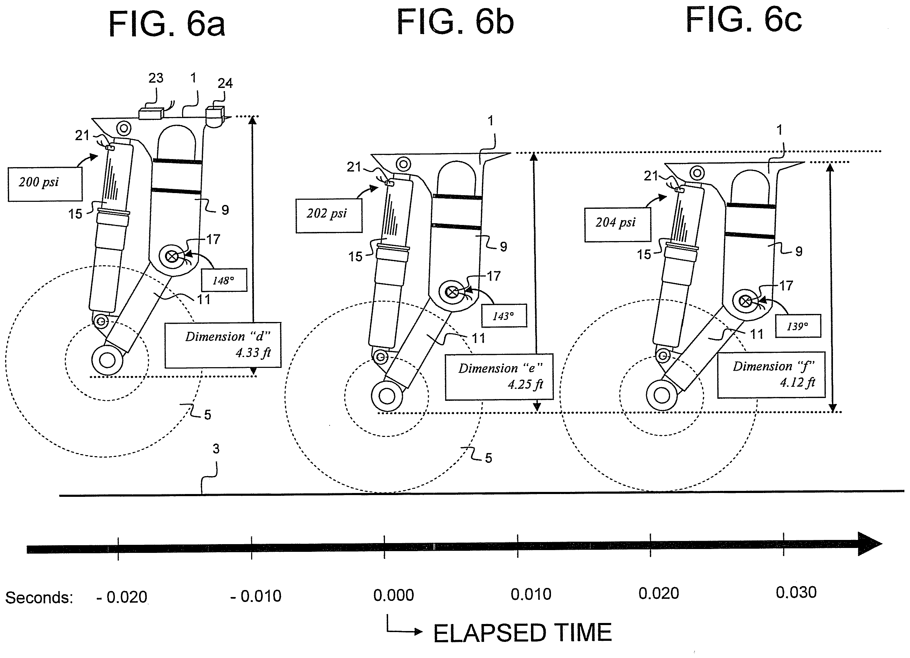

Shown by FIGS. 6a, 6b and 6c is an alternate design for aircraft landing gear where the landing gear 9 incorporates a trailing arm 11. Aircraft 1 landing loads are absorbed by the compression of shock absorber 15. As shown throughout FIGS. 6a, 6b and 6c the pressure within shock absorber 15 is monitored by pressure sensor 21 and the rotating components are no longer the torque-link 19 as shown in FIG 5a-c, but rather the hinge-point is at the connection of strut 9 with trailing arm 11. A rotation sensor 17 is attached to the hinge-point of trailing arm 11, and as described in FIGS 5 a-c above measures rotation. Pressure within shock absorber 15 is measured by pressure sensor 21. The pressure within shock absorber 15 is proportional to the volume of shock absorber 15. The volume of shock absorber 15 is proportional to the telescopic extension of shock absorber 15. The telescopic extension of shock absorber 15 is proportional to the distance as measured by Dimension "d".

Additionally, angle changes of trailing arm 11, as measured by rotation senor 17 and are proportional to the distance as measured by Dimension "d". A mathematical algorithm associated with each different aircraft landing gear variations, as to the size and stroke of the compressible landing gear components is developed to convert both measured strut pressure changes and measure rotating element angle changes, to calculate the variations in distance from Dimension "d" to Dimension "e", then further to Dimension "F" of the various aircraft types.

The examples explained herein will allow for the identification of the aircraft VVG at initial contact with the ground, which is further used in conjunction with additional methods of this invention as the justification basis in allowance for an increase in the aircraft MLW.

The vertical velocity at initial contact can be determined using the methods described in this inventor's earlier US Patent No. 7,274,310. Such methods include measuring the extension of the strut over elapsed time or measuring the rotation of a linkage strut over elapsed time. Furthermore, acceleration measurements can be used to determine vertical velocity. For example, the acceleration of the aircraft hull, over elapsed time can be used to determine vertical velocity at initial contact.

Some compensation may be needed to increase the accuracy of the measurements. For example, "initial contact" as used herein may be the first contact of the landing gear with the ground or it may be a subsequent contact, such as may be encountered after a bounce. Thus, one type of compensation would be to determine the contact of interest. Such contact would typically be the hardest contact.

Another type of correction has to do with inclination of the airframe to horizontal. Referring now to FIGS. 7a and 7b there is shown an illustration of Software Program Epsilon - Aircraft Hull Angle Compensation, which compensates for the aircraft hull 1 not being horizontal and level, as the aircraft starts and continues through the landing event. Shown in FIG. 7b is horizontal aircraft hull 1, with attached perpendicular landing gear 9, where perpendicular landing gear 9 has a measured angle (measured by the inclinometer 23 shown in FIG. 5a) of 90.0° to that of the ground 3. The aircraft 1 with perpendicular landing gear 9 shown in FIG. 7a has a measured angle of 95.4° to that of the ground 3.

The angle of landing gear strut body 9 in relation to this example of aircraft hull 1 is fixed perpendicular and does not change (as shown in FIGS. 5a, 5b and 5c). Furthermore, while the aircraft is in flight and commences to flare the aircraft hull 1 (shown in FIG 2b) for the landing event, aircraft hull 1 will change angle prior to and during the landing event. Adjustments for the changing angle of aircraft hull 1, to that of what the aircraft hull 1 would be when parallel to ground 3 (see FIG. 7b) are made to correct for differences in landing gear compression determinations, as compared to strut body 9 (see FIG. 5c) when vertical/perpendicular to the ground 3. In the example shown, the correction from 95.4° non-vertical landing gear 9 (FIG 7a), to that of the 90.0° vertical landing gear 9 (FIG. 7b) will be an adjustment of 5.4°. Mathematical algorithms make adjustments to correct the landing gear rate of compression, to that equivalent of landing gear 9 being vertical and aircraft hull 1 being in a level position, parallel to ground 3, so as to determine the "true" vertical value of descent velocity.

Referring now to FIGS. 8a and 8b there is shown an illustration of Software Program Zeta - Aircraft Vertical Velocity at initial contact with the Ground "VVG", and Exceedance Determination. Software Program Zeta measures the aircraft VVG on all landing events. The software program determines the descent velocity of the aircraft at initial contact with the ground and also determines if the descent velocity exceeds a predetermined threshold, and the software program provides and indication to the flight crew and/or maintenance personnel if the threshold is exceeded.

Shown in FIG. 8a is a typical "transport category" aircraft 1 maintaining a landing descent angle as it approaches the ground 3. Deployed from the lower body of aircraft 1, are main landing gear 9. Main landing gear 9 absorbs the initial landing force as aircraft 1 comes into initial contact with the ground 3. Each of the downward pointing arrows (↓) represents the equivalent of 1fps. As shown in FIG. 8a and working from left to right, the initial aircraft 1 shown has a total of twelve ↓ and represents the aircraft descending at 12fps. Upon execution of the flare procedure the aircraft then shows a total of four ↓ and represents the aircraft's reduced vertical velocity to 4fps as it nears initial contact with the ground 3. As aircraft 1 comes into initial contact with the ground 3, the aircraft then shows a total of two ↓ and represents the aircraft's reduced vertical velocity (being the VVG), and now coming into contact with the ground at 1.8fps. Though the aircraft 1 has come into initial contact with the ground 3, until the total weight of the aircraft 1 has become totally supported by the compressing landing gear 9, the VVG of aircraft 1 will continue to decrease until such time as the vertical velocity becomes zero, being at some point after the aircraft 1 has come into initial contact with the ground 3.

In this example landing events with measured VVG at 6.0fps or less, are considered to be a "within limits" landing event. If a measured landing event has a VVG in excess 6.0fps it is identified as an "exceedance."

As aircraft 1 nears runway 3, and a flare procedure is not executed properly (as shown by the aircraft in FIG. 8b) a landing event of 6.1fps or higher may occur that is not within acceptable limits. The determined threshold for exceedance limitation is subject to change to a particular airline operational preference. As an example: a respective airline may wish to lower the exceedance limit threshold to a value of 5.3fps. Therefore Software Program Zeta is designed with the ability to change the values designated for an exceedance.

2fps is a typical VVG for most aircraft 1 landing events (see FAA landing data, FIG. 3). In today's airline operations, the VVG of aircraft 1 is not measured, thus the text of the design criteria using the word assumption. Therefore, the assumption used by aviation Regulatory Authorities must allow for a very large margin of safety. The assumption used to maintain this margin for safety for aviation Regulatory Authorities is the 10fps assumption of a limit descent velocity.

Strut compression is determined by either measured rotation of hinged elements of the strut, or by measured pressure increases within the landing gear, and strut compression is measured throughout the landing event. The landing event is from just before the strut has made contact with the ground, when the wings generate lift to support the aircraft off of the ground, to the strut in contact with the ground and the wings no longer generating lift, so that the full weight of the aircraft is applied to the struts. Typically, the highest descent velocity will occur upon initial contact of the strut with the ground. However, due to landing vagaries, the highest descent velocity may occur sometime after initial contact of the strut with the ground. Therefore, preferably, strut compression measurements are taken throughout the landing event so that the highest descent velocity can be found if not at the beginning of the event. As used herein, "initial contact" means the contact of interest in determining descent velocity, whether that contact is truly the first contact or a subsequent contact, such as from a bounce of the aircraft.

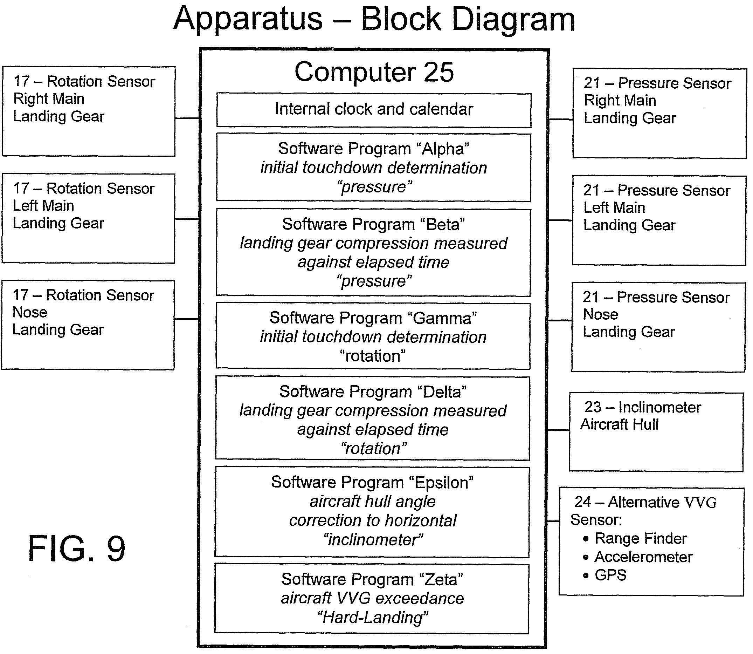

Referring now to FIG. 9, there is shown a block diagram illustrating computer 25 being part of the apparatus of the invention, where multiple inputs from (respective nose, left-main and right-main landing gear) rotation sensors 17 and strut pressure sensors 21 as sources of data inputs to computer 25. Aircraft hull inclinometer 23, which can be located on any horizontal portion of the aircraft 1, or located directly onto the vertical landing gear strut (see FIG 5a) also has an input to computer 25. The computer 25 output determinations and information are transmitted via a series of flashing patterns to a LED diode located on the face of computer 25. Various changes of aircraft hull angle, measured by inclinometer 23 are inputs to onboard computer 25 prior to initial contact with the ground, as well as angle changes as the landing gear makes initial contact with the ground. Computer 25 is equipped with an internal clock and calendar to document the time and date of received and stored data. Computer 25 has multiple software packages which include: Software Program "Alpha" - initial touch-down determination and landing gear compression measured by increases in strut pressure, to determine that the aircraft has come into initial contact with the ground; Software Program "Beta" - landing gear compression measured by pressure increases compared to elapsed time to determine aircraft VVG; Software Program "Gamma" - initial touch-down determination and landing gear compression measured by decreases in torque-link angle, to determine that the aircraft has come into initial contact with the ground; Software Program "Delta" - landing gear compression measured by pressure further decreases in torque-link angle, as compared to elapsed time, to determine aircraft VVG; Software Program "Epsilon" - Aircraft Approach Angle Compensation, which uses inclinometer data to correct vertical velocity determinations at initial contact with the ground, where the aircraft hull is not horizontal and level will the ground. Software Program "Zeta"- Aircraft Vertical Velocity at initial contact with the Ground "VVG", threshold and exceedance, determination of Hard Landing.

Although the VVG of an aircraft is discussed as being measured by pressure sensors as an additional measurement, or, as an illustrative example, by rotation sensors on a landing gear strut, there are other ways and other sensors 24 (see FIG. 6) to measure VVG. For example, a rangefinder 24 can be used as an additional measurement device. The rangefinder is mounted to the aircraft hull and is directed down to the ground. The rangefinder can be a laser rangefinder or an acoustic rangefinder. As the aircraft approaches the ground during a landing event, the distance or range between the rangefinder and the ground is measured. Contact of the landing gear with the ground is detected by the range becoming constant, within a variation, or by the range becoming a predetermined distance, or a combination of both. The VVG is determined by the change in measured distance or range, over elapsed time.

Another example of a sensor 24 used to measure VVG is an accelerometer, two of which are used in the methods according to the present invention. As the aircraft descends, any changes in acceleration are sensed by the accelerometers. The acceleration of the aircraft during descent is measured and recorded. The initial contact of the landing gear with the ground is sensed and determined by the sudden change in acceleration. The VVG is determined from the measure of acceleration at initial contact of the landing gear with the ground.

Still another example of the sensor 24 used to measure VVG is a global positioning system (GPS) receiver. The GPS receiver can determine altitude. If the altitude of the runway is known, then the distance between the GPS receiver and the ground can be determined. This distance is determined and measured as the aircraft descends toward ground. The VVG can be determined when the landing gear of the aircraft makes initial contact with the ground. The GPS receiver data can be used to determine initial contact of the aircraft with ground by determining when the aircraft reaches the proper altitude for the landing gear it will be touching the ground. Alternatively, the altitude data becomes constant when the aircraft touches the ground.

One or more of these devices, pressure sensor, rotation sensor, accelerometer, rangefinder, and GPS receiver can be used in combination. For example, pressure sensors in the struts can be used in conjunction with rangefinders, accelerometers, and/or GPS receivers to determine when the landing gear makes initial contact with the ground.

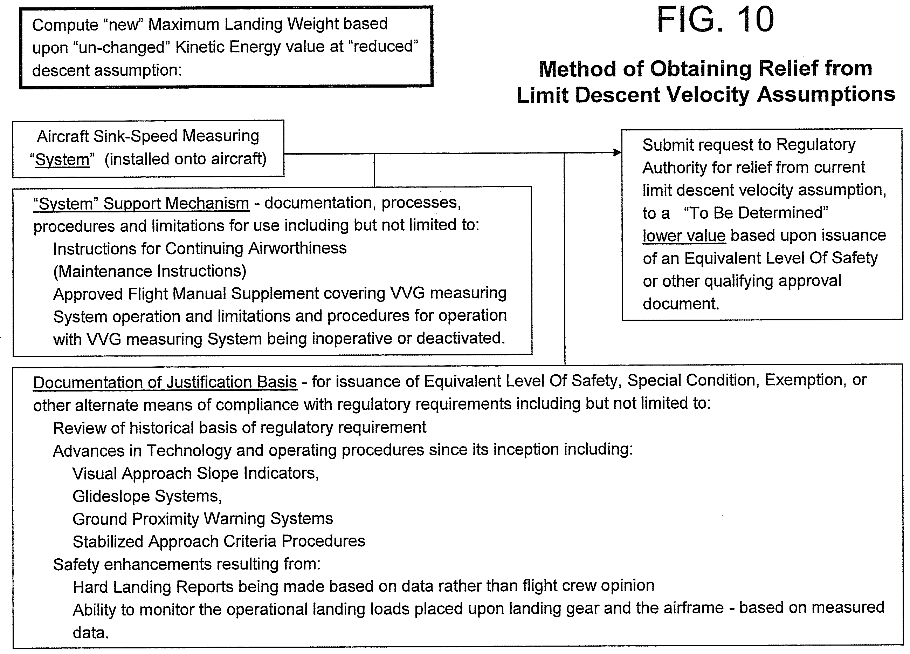

Referring now to FIG. 10, there is shown a process design flow chart for a Method of Obtaining Relief from Limit Descent Velocity Assumptions by the Regulatory Authorities. Relief from limit descent velocity assumptions, from the regulatory authorities is required for the subsequent operation of the aircraft at a second higher maximum landing weight limitation. Upon the computation of a new increased Max-Landing Weight limitation, predicated on a reduction of the assumed and subsequently measured descent velocity, and the apparatus to measure and verify "VVG" on all subsequent landing events, a system support mechanism is created to document the processes, procedures and limitations for the use of the apparatus and methods of this of this invention, that Regulatory Authorities are assured an Equivalent Level of Safety is maintained. These include, but are not limited to creating and maintaining Instructions for Continued Airworthiness, addition of an Approved Flight Manual Supplement covering this new VVG measuring system operation, limitations and procedures, as well as operational adjustments in the event the VVG measurement system is inoperable.

Also required is a complete "Documentation of the Justification Basis" for the issuance of an Equivalent Level of Safety, Special Condition, Exemption, or other alternate means of regulatory compliance. These factors include a review of the historical basis of regulatory requirement, along with advancement in technology and operating procedures since the inception of the 10fps rule. Some of these advancements include the development of new systems and procedures that aid pilots in executing proper landings with systems such as Visual Approach Slope Indicators, Glideslope Aid Systems, Ground Proximity Warning Systems, and improved Stabilized Landing Approach Criteria and Procedures.

Safety will be increased by the subsequently implemented practice of aircraft Hard Landing Reports being made on measured data, rather than aircraft flight crew opinion. Safety will also be increased with subsequent monitoring of aircraft operational landing loads, at each respective landing gear, as opposed to waiting until a scheduled maintenance cycle event, to then find minor or major damage, which would have occurred earlier.

These supporting materials and procedures are submitted to the Regulatory Authority as justification for the Regulatory Authority's acknowledgement and approval to allow design criteria assumptions to be reduced to a value lower than 10fps, with this demonstration of an Equivalent Level of Safety, or other qualifying document.

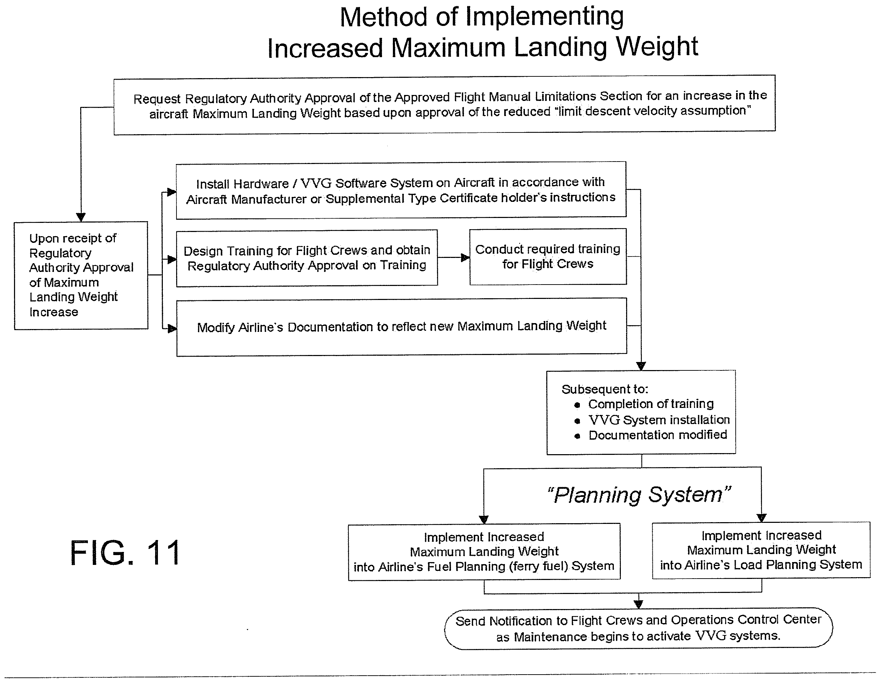

Referring now to FIG. 11, there is shown a process design flow chart for a Method of Implementing Increased Maximum Landing Weight. This additional system support mechanism is created to document the processes, procedures and limitations for the use of the apparatus and methods of this invention, that Regulatory Authorities are assured an Equivalent Level of Safety is maintained. Request is made of the Regulatory Authority to approve modifications to the aircraft's Approved Flight Manual Limitations section regarding the increase in aircraft MLW limitation. Upon such Flight Manual modification approval, the completion of the installation of the VVG measuring system onto the aircraft, in accordance with respective Supplemental Type Certificate installation requirements; the design of newly modified flight training programs for flight crew and implement such training programs for the use and understanding of the new VVG system are completed. The airline which operates the aircraft with the increased MLW limitation will modify its documentation for each respective aircraft equipped with the VVG measuring system. The airline operating aircraft with the increased MLW will amend their "load planning programs". When these programs and processes are complete, notification can be made to flight crews and the airline's Operational Control Center, as Maintenance Control activates the VVG systems.

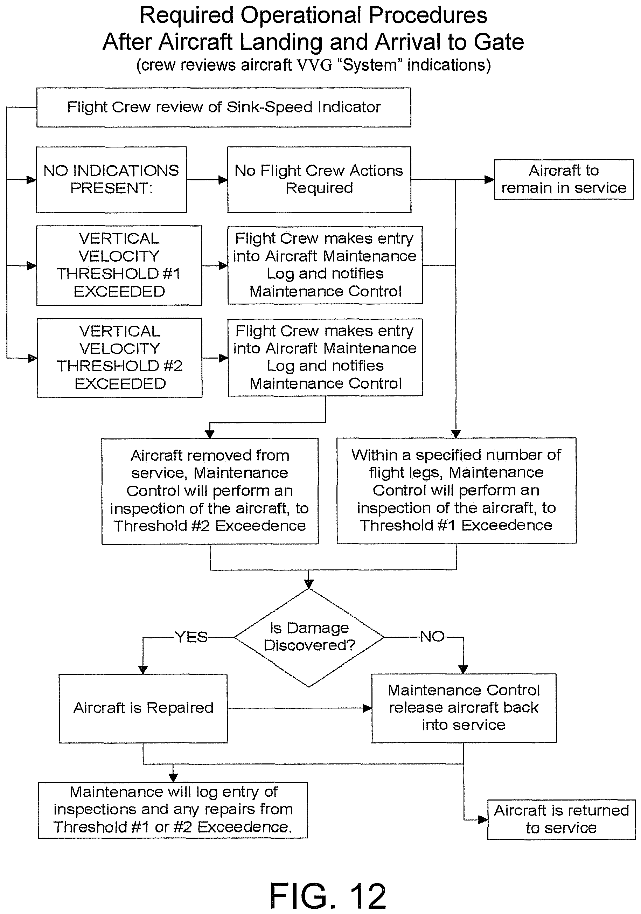

Referring now to FIG. 12, there is shown a process design flow chart, for required post-landing actions, to be followed by aircraft Flight Crew and Maintenance Control personnel, upon observance of measurement indications from VVG measuring System. This additional system support mechanism is created to document the processes, procedures and limitations for the use of the apparatus and methods of this invention, so that Regulatory Authorities are assured an Equivalent Level of Safety is maintained. In the preferred embodiment of this invention the VVG measuring system will display any aircraft VVG "Threshold" exceedance within three defined ranges. The first range of measurements will be those of less than 6fps. If the aircraft lands at a VVG less than 6fps, there will be no indication of a VVG Threshold #1 exceedance, but merely an indication that the system is functioning properly and accurately measuring VVG. Such case requires no flight crew actions and the aircraft may remain in service. If the aircraft lands exceeding 6fps, but less than 8fps a VVG Threshold #1 exceedance will be indicated. Still, to offer a "Superior Level of Safety", upon a VVG Threshold #1 exceedance, the flight crew will make a notation of the incident into the aircraft logbook and notify Maintenance Control of the Threshold #1 exceedance. The aircraft will remain in service throughout the remainder of that day, but Airline Maintenance Control will perform a Threshold #1 inspection of the aircraft at the end of that day's service. This VVG identification and aircraft inspection process is not a requirement of the current aircraft regulations and implementing such a program offers a Superior Level of Safety. If no damage is found to the aircraft, the aircraft may return to service. If damage is found, the damage will be repaired and additional actions taken to lower the Threshold #1 exceedance parameters, though landing events within the 6fps to 8fps range should not damage the aircraft, due to original 10fps design criteria, even though such damage was found. This added ability to lower the VVG value, that prompts the Threshold #1 inspection, will offer a Superior Level of Safety. Once the damage has been repaired, the aircraft can then be returned to service.

If the aircraft lands and WG exceeds a predetermined value (in this example greater than 8fps) there will be an indication of a Threshold #2 exceedance. With the occurrence of a Threshold #2 exceedance, the aircraft must be immediately removed from service. Maintenance Control will perform a more intense Threshold #2 inspection of the aircraft for damage. If no damage is found to the aircraft, the aircraft may return to service. If damage is found, the damage will be repaired and additional actions taken to lower the Threshold #2 exceedance parameters, though landing events less than 8fps should not damage the aircraft, due to original 10fps design criteria, even though such damage was found. This added ability will offer a Superior Level of Safety. Once the damage has been repaired, the aircraft can then be returned to service.

Thus, an aircraft can be operated at a different maximum landing weight. The aircraft has a first maximum landing weight based upon a first assumed maximum descent velocity. Vertical velocities of the aircraft at initial contact with the ground are obtained. These can be obtained by measurements from the aircraft itself, or aircraft of the same model, or from previously recorded measurements of the aircraft or aircraft of the same model. Vertical velocity data obtained from one particular aircraft or airplane can of course be used for aircraft or airplanes of the same model (such as Boeing 767). Using the vertical velocity data, the aircraft is operated at a second assumed maximum landing velocity. While so operating the aircraft, the vertical velocities of the aircraft at initial contact with the ground are measured and recorded. The aircraft is operated at a second maximum landing weight based upon the second assumed maximum descent velocity. Typically, the second maximum landing weight is greater than the first maximum landing weight. The first maximum descent velocity is typically 10 fps. The second maximum descent velocity can be less than 10 fps, such as 9.8 fps or 9.6 fps. During operation, if the measured descent velocity at initial contact with the ground exceeds a predetermined threshold, typically set at less than the second assumed maximum descent velocity, then the aircraft is inspected.

Described within this invention are methods and strategies developed; in which the whole are now greater than the sum of its parts. Each of the sub-practices of this invention are elements which build upon each other, and strengthen the foundation of justification for the realization that the aircraft design criteria regulations dating back to 1945, have worked well for decades; but the development of new technologies, procedures and the careful implementation and monitoring of such practices offer justification through a finding of an Equivalent Level of Safety, for aviation Regulatory Authorities to allow a reduction in the original limit descent velocity assumption of 10fps to a second lower descent velocity assumption, which is subsequently a measured vertical descent velocity; and allow the associated increase to a second higher aircraft maximum landing weight limitation.

Historically systems that measure sink-rate were used either to aid pilots in making flight-path adjustments, thereby improving the pilot's landing technique; or after landing mishaps, to better determine at what point during the landing approach, errors might have been made for adjusting the aircraft descent rates.

As opposed to using aircraft vertical descent measurements prior to the landing event, this invention uses the measurement of aircraft vertical velocity, at the initial contact with the ground, for a different function. This function being to set a determined limit, verified by mechanical measurement, for a safe but abrupt VVG, as a threshold for aircraft inspection; to justify relief in regulatory design criteria and an increase in the aircraft landing weight limitation

Where previous systems have been used as a tool to aid pilots with pre-landing approach procedures, to help avoid hard landing events, this new invention uses the apparatus and methods to increase the economic value of the aircraft, by bringing to better light that current regulations are too stringent; and furthermore by monitoring all subsequent landing events, and having better detection of abrupt landing events, and requiring aircraft inspection triggered by mechanical sensors as opposed to subjective pilots decisions; allows landing at an increased landing weight ... to be at an Equivalent Level of Safety.

Although an exemplary embodiment of the invention has been disclosed and discussed, it will be understood that other applications of the invention are possible and that the embodiment disclosed may be subject to various changes, modifications, and substitutions without necessarily departing from the scope of the invention.

**Claims**

1.  A method of operating an aircraft (1), the aircraft having a first maximum landing weight based upon a first maximum descent velocity, which first maximum descent velocity is determined by a Regulatory Authority, wherein the aircraft has landing gear (9), each landing gear comprising a telescopic strut which is capable of extension and compression, the landing gear strut comprising a hull portion, which remains fixed to a hull of the aircraft when the landing gear is deployed for landing, and a tire portion (13), which is capable of moving at a different velocity, with respect to the hull portion, the method comprising the steps of:

    obtaining vertical velocities of the aircraft at initial contact of the aircraft with the ground (3) during landing events;
    based upon the obtained vertical velocities of the aircraft at initial contact with the ground, operating the aircraft at or below a second maximum descent velocity while measuring and recording the vertical velocities of the aircraft at initial contact of the aircraft with the ground during subsequent landing events, the second maximum descent velocity being less than the first maximum descent velocity; and

operating the aircraft at a second maximum landing weight based upon the second maximum descent velocity,

**characterized in that** the step of measuring vertical velocities of the aircraft at initial contact of the aircraft with the ground during landing events further comprises the steps of:

a) providing a first accelerometer on the hull portion of the strut;
b) providing a second accelerometer on the tire portion of the strut;
c) measuring the acceleration of the hull portion with the first accelerometer as the aircraft lands;
d) measuring the acceleration of the tire portion with the second accelerometer as the aircraft lands;
e) comparing the acceleration of the hull portion with the acceleration of the tire portion;
f) determining the descent velocity of the hull portion of the strut, at initial contact with the ground.

2. The method of claim 1 wherein the second maximum landing weight is greater than the first maximum landing weight.

3. The method of claim 1 wherein the step of obtaining vertical velocities of the aircraft at initial contact of the aircraft with the ground during landing events further comprises the step of measuring and recording the descent velocities of the aircraft at initial contact of the aircraft with the ground, during landing events.

4. The method of claim 1 wherein the aircraft has landing gear, each landing gear comprising a telescopic strut which is capable of extension and compression, the step of measuring a vertical velocity of the aircraft at initial contact of the aircraft with the ground during subsequent landing events further comprises the steps of:

a) measuring the extension of the one of the telescopic struts before contact of the respective landing gear with the ground;
b) measuring the extension of the one telescopic strut during initial contact of the respective landing gear with the ground;
c) measuring the amount of changed extension of the one telescopic strut with respect to elapsed time;
d) determining the rate of compression of the one telescopic strut;
e) determining the descent velocity of the aircraft portion of the one telescopic strut.

5. The method of claim 1 wherein the aircraft has landing gear, the step of measuring a vertical velocity of the aircraft at initial contact with the ground during subsequent landing events, further comprises the steps of:

a) providing a rangefinder on the hull of the aircraft, the rangefinder directed down at the ground;
b) measuring the distance to the ground of the aircraft over elapsed before the landing gear makes initial contact with the ground;
c) determining when the landing gear makes initial contact with the ground;
d) determining the descent velocity of the aircraft at initial contact by the landing gear with the ground.

6. The method of claim 1 wherein the aircraft has a landing gear, the step of measuring a vertical velocity of the aircraft at initial contact with the ground during subsequent landing events, further comprising the steps of:

a) providing an accelerometer on the hull of the aircraft;
b) measuring the acceleration of the aircraft hull over elapsed time before the landing gear makes initial contact with the ground;
c) determining when the landing gear makes initial contact with the ground;
d) determining the descent velocity of the aircraft at initial contact by the landing gear with the ground.

7. The method of claim 1 wherein the aircraft has landing gear, the step of measuring a vertical velocity of the aircraft at initial contact with the ground during subsequent landing events, further comprises the steps of:

a) providing a global positioning system receiver on the aircraft;
b) measuring the location of the aircraft hull above the ground over elapsed time before the landing gear makes initial contact with the ground;
c) determining when the landing gear makes initial contact with the ground;

d) determining the descent velocity of the aircraft at initial contact by the landing gear with the ground.

8. The method of claim 1 wherein the first maximum descent velocity is 10 fps.

9. The method of claim 8 wherein the step of operating the aircraft at a second descent velocity that is less than 10 fps further comprises the step of operating the aircraft at or below a second descent velocity of 9.8 fps.

10. The method of claim 8 wherein the step of operating the aircraft at a second descent velocity that is less than 10 fps further comprises the step of operating the aircraft at or below a second descent velocity of 9.6 fps.

11. The method of claim 8 wherein the step of operating the aircraft at a second descent velocity that is less than 10 fps further comprises the steps of:

 a) measuring and recording the vertical velocity of the aircraft at initial contact of the aircraft with the ground during a landing event;
 b) determining if the vertical velocity exceeds a predetermined threshold;
 c) if the vertical velocity exceeds a predetermined threshold, then inspecting the aircraft before resuming flight operations.

12. A method of operating an aircraft (1), the aircraft having a first maximum landing weight based upon a first maximum descent velocity, which first maximum descent velocity is determined by a Regulatory Authority, wherein the aircraft has landing gear, each landing gear comprising a telescopic strut (9) which is capable of extension and compression, the landing gear strut comprising a hull portion, which remains fixed to a hull of the aircraft when the landing gear is deployed for landing, and a tire portion (13), which is capable of moving at a different velocity, with respect to the hull portion, the method comprising the steps of:

 measuring and recording the descent velocities of the aircraft at initial contact of the aircraft with the ground, during landing events;
 determining if a measured descent velocity of the aircraft at initial contact with the ground exceeds a predetermined threshold;
 inspecting the aircraft, upon determining if the measured descent velocity exceeds the predetermined threshold;
 operating the aircraft at a second descent velocity that is less than the first descent velocity; and

operating the aircraft at a second maximum landing weight that is greater than the first maximum landing weight, based upon the second descent velocity;
**characterized in that** the step of measuring vertical velocities of the aircraft at initial contact of the aircraft with the ground during landing events further comprises the steps of:

 a) providing a first accelerometer on the hull portion of the strut;
 b) providing a second accelerometer on the tire portion of the strut;
 c) measuring the acceleration of the hull portion with the first accelerometer as the aircraft lands;
 d) measuring the acceleration of the tire portion with the second accelerometer as the aircraft lands;
 e) comparing the acceleration of the hull portion with the acceleration of the tire portion;
 f) determining the descent velocity of the hull portion of the strut, at initial contact with the ground..

13. The method of claim 12 wherein the aircraft has landing gear, each landing gear comprising a telescopic strut which is capable of extension and compression, the step of measuring a vertical velocity of the aircraft at initial contact of the aircraft with the ground during a landing event further comprises the steps of:

 a) measuring the extension of the one of the telescopic struts before contact of the respective landing gear with the ground;
 b) measuring the extension of the one telescopic strut during initial contact of the respective landing gear with the ground;
 c) measuring the amount of changed extension of the one telescopic strut with respect to elapsed time;
 d) determining the rate of compression of the one telescopic strut;
 e) determining the descent velocity of the aircraft portion of the one telescopic strut.

14. The method of claim 12 wherein the aircraft has landing gear, the step of measuring the descent velocity of the aircraft at initial contact with the ground during landing events, further comprises the steps of:

 a) providing a rangefinder on the hull of the aircraft, the rangefinder directed down at the ground;
 b) measuring the distance to the ground of the aircraft over elapsed time before the landing gear makes initial contact with the ground;

c) determining when the landing gear makes initial contact with the ground;

d) determining the descent velocity of the aircraft at initial contact by the landing gear with the ground.

15. The method of claim 12 wherein the aircraft has a landing gear, the step of measuring the descent velocity of the aircraft at initial contact with the ground during landing events, further comprising the steps of:

a) providing an accelerometer on the hull of the aircraft;

b) measuring the acceleration of the aircraft hull over elapsed time before the landing gear makes initial contact with the ground;

c) determining when the landing gear makes initial contact with the ground;

d) determining the descent velocity of the aircraft at initial contact by the landing gear with the ground.

16. The method of claim 12 wherein the aircraft has landing gear, the step of measuring the descent velocity of the aircraft at initial contact with the ground during landing events, further comprises the steps of:

a) providing a global positioning system receiver on the aircraft;

b) measuring the location of the aircraft hull above the ground over elapsed time before the landing gear makes initial contact with the ground;

c) determining when the landing gear makes initial contact with the ground;

d) determining the descent velocity of the aircraft at initial contact by the landing gear with the ground.

17. An apparatus for monitoring landing gear (9) of an aircraft (1) during initial landing gear contact with the ground (3) so that the maximum weight limitation of the aircraft can be increased, each landing gear comprising a telescopic strut with a compressible fluid, the landing gear strut comprising a hull portion which remains fixed to a hull of the aircraft when the landing gear is deployed for landing, and a tire portion (13), which is capable of moving at a different velocity, with respect to the hull portion,
**characterized by** further comprising:

a) a first accelerometer adapted to be mounted to the hull of the aircraft;

b) a second accelerometer adapted to be mounted to the tire portion of the strut;

c) a processor having a first input connected to the first accelerometer and a second input connected to the second accelerometer, the processor being configured for recording the acceleration of the hull portion of the strut as measured in use by the first accelerometer and the acceleration of the tire portion of the strut as measured in use by the second accelerometer, for comparing the acceleration of the hull portion with the acceleration of the tire portion, and for determining the initial contact of the landing gear from the comparison.

18. The apparatus of claim 17 wherein the first accelerometer is adapted to be mounted on the hull portion of the aircraft strut.

19. The apparatus of claim 17 wherein the processor is configured to determine the descent velocity of the hull portion of the strut at initial contact.

20. The apparatus of claim 19 wherein the processor is configured to determine if the descent velocity exceeds a predetermined threshold, and if so, to provide an indication that the descent velocity exceeds the predetermined threshold.

21. The apparatus of claim 17, further comprising:

a) a pressure sensor adapted to be located so as to measure the pressure inside the strut;

b) the processor has an input that is connected to the pressure sensor, the processor being configured to determine from the pressure and the accelerations when the initial contact of the landing gear occurs.

22. The apparatus of claim 21 wherein the processor is configured to determine the descent velocity of the hull portion of the strut as compared to the acceleration of the tire portion of the strut.

**Patentansprüche**

1. Verfahren zum Betreiben eines Luftfahrzeugs (1), wobei das Luftfahrzeug ein erstes maximales Landegewicht basierend auf einer ersten maximalen Sinkfluggeschwindigkeit aufweist, wobei die erste maximale Sinkfluggeschwindigkeit durch eine Regulierungsbehörde bestimmt wird, wobei das Luftfahrzeug Fahrwerke (9) aufweist, jedes Fahrwerk eine Teleskopstrebe umfasst, die zu Extension und Kompression fähig ist, die Fahrwerkstrebe einen Rumpfabschnitt, der fest am Rumpf des Luftfahrzeugs bleibt, wenn das Fahrwerk zum Landen ausgefahren wird, und einen Reifenabschnitt (13) umfasst, der zu Bewegung bei einer anderen Geschwindigkeit in Bezug auf den Rumpfabschnitt fähig ist, wobei das Verfahren die folgenden Schritte umfasst:

Erhalten von Vertikalgeschwindigkeiten des Luftfahrzeugs bei Erstkontakt des Luftfahrzeugs mit dem Boden (3) bei Landeereignissen;

Betreiben des Luftfahrzeugs basierend auf den erhaltenen Vertikalgeschwindigkeiten des Luftfahrzeugs bei Erstkontakt mit dem Boden bei oder unter einer zweiten maximalen Sinkfluggeschwindigkeit, während die Vertikalgeschwindigkeiten des Luftfahrzeugs bei Erstkontakt des Luftfahrzeugs mit dem Boden bei späteren Landeereignissen gemessen und aufgezeichnet werden, wobei die zweite maximale Sinkfluggeschwindigkeit niedriger als die erste maximale Sinkfluggeschwindigkeit ist; und

Betreiben des Luftfahrzeugs bei einem zweiten maximalen Landegewicht basierend auf der zweiten maximalen Sinkfluggeschwindigkeit, **dadurch gekennzeichnet, dass** der Schritt des Messens von Vertikalgeschwindigkeiten des Luftfahrzeugs bei Erstkontakt des Luftfahrzeugs mit dem Boden bei Landeereignissen ferner die folgenden Schritte umfasst:

a) Bereitstellen eines ersten Beschleunigungsmessers auf dem Rumpfabschnitt der Strebe;

b) Bereitstellen eines zweiten Beschleunigungsmessers auf dem Reifenabschnitt der Strebe;

c) Messen der Beschleunigung des Rumpfabschnitts mit dem ersten Beschleunigungsmesser bei Landung des Luftfahrzeugs;

d) Messen der Beschleunigung des Reifenabschnitts mit dem zweiten Beschleunigungsmesser bei Landung des Luftfahrzeugs;

e) Vergleichen der Beschleunigung des Rumpfabschnitts mit der Beschleunigung des Reifenabschnitts;

f) Bestimmen der Sinkfluggeschwindigkeit des Rumpfabschnitts der Strebe bei Erstkontakt mit dem Boden.

2. Verfahren nach Anspruch 1, wobei das zweite maximale Landegewicht größer als das erste maximale Landegewicht ist.

3. Verfahren nach Anspruch 1, wobei der Schritt des Erhaltens von Vertikalgeschwindigkeiten des Luftfahrzeugs bei Erstkontakt des Luftfahrzeugs mit dem Boden bei Landeereignissen ferner den Schritt des Messens und Aufzeichnens der Sinkfluggeschwindigkeiten des Luftfahrzeugs bei Erstkontakt des Luftfahrzeugs mit dem Boden bei Landeereignissen umfasst.

4. Verfahren nach Anspruch 1, wobei das Luftfahrzeug Fahrwerke aufweist, jedes Fahrwerk eine Teleskopstrebe umfasst, die zu Extension und Kompression fähig ist, wobei der Schritt des Messens einer Vertikalgeschwindigkeit des Luftfahrzeugs bei Erstkontakt des Luftfahrzeugs mit dem Boden bei späteren Landeereignissen ferner die folgenden Schritte umfasst:

a) Messen der Extension der einen der Teleskopstreben vor Kontakt des jeweiligen Fahrwerks mit dem Boden;

b) Messen der Extension der einen Teleskopstrebe bei Erstkontakt des jeweiligen Fahrwerks mit dem Boden;

c) Messen des Ausmaßes von geänderter Extension der einen Teleskopstrebe in Bezug auf abgelaufene Zeit;

d) Bestimmen der Kompressionsrate der einen Teleskopstrebe;

e) Bestimmen der Sinkfluggeschwindigkeit des Luftfahrzeugabschnitts der einen Teleskopstrebe.

5. Verfahren nach Anspruch 1, wobei das Luftfahrzeug Fahrwerke aufweist, und der Schritt des Messens einer Vertikalgeschwindigkeit des Luftfahrzeugs bei Erstkontakt mit dem Boden bei späteren Landeereignissen ferner die folgenden Schritte umfasst:

a) Bereitstellen eines Entfernungsmessers am Rumpf des Luftfahrzeugs, wobei der Entfernungsmesser nach unten zum Boden gerichtet ist;

b) Messen der Entfernung des Luftfahrzeugs zum Boden im Zeitablauf, bevor das Fahrwerk Erstkontakt mit dem Boden herstellt;

c) Bestimmen, wann das Fahrwerk Erstkontakt mit dem Boden herstellt;

d) Bestimmen der Sinkfluggeschwindigkeit des Luftfahrzeugs bei Erstkontakt mit dem Boden durch das Fahrwerk.

6. Verfahren nach Anspruch 1, wobei das Luftfahrzeug ein Fahrwerk aufweist, und der Schritt des Messens einer Vertikalgeschwindigkeit des Luftfahrzeugs bei Erstkontakt mit dem Boden bei späteren Landeereignissen ferner die folgenden Schritte umfasst:

a) Bereitstellen eines Beschleunigungsmessers am Rumpf des Luftfahrzeugs;

b) Messen der Beschleunigung des Luftfahrzeugrumpfs im Zeitablauf, bevor das Fahrwerk Erstkontakt mit dem Boden herstellt;

c) Bestimmen, wann das Fahrwerk Erstkontakt mit dem Boden herstellt;

d) Bestimmen der Sinkfluggeschwindigkeit des Luftfahrzeugs bei Erstkontakt mit dem Boden durch das Fahrwerk.

**7.** Verfahren nach Anspruch 1, wobei das Luftfahrzeug Fahrwerke aufweist, und der Schritt des Messens einer Vertikalgeschwindigkeit des Luftfahrzeugs bei Erstkontakt mit dem Boden bei späteren Landeereignissen ferner die folgenden Schritte umfasst:

a) Bereitstellen eines GPS (globales Positionsbestimmungssystem)-Empfängers im Luftfahrzeug;
b) Messen der Position des Luftfahrzeugrumpfs über dem Boden im Zeitablauf, bevor das Fahrwerk Erstkontakt mit dem Boden herstellt;
c) Bestimmen, wann das Fahrwerk Erstkontakt mit dem Boden herstellt;
d) Bestimmen der Sinkfluggeschwindigkeit des Luftfahrzeugs bei Erstkontakt mit dem Boden durch das Fahrwerk.

**8.** Verfahren nach Anspruch 1, wobei die erste maximale Sinkfluggeschwindigkeit 10 fps beträgt.

**9.** Verfahren nach Anspruch 8, wobei der Schritt des Betreibens des Luftfahrzeugs bei einer zweiten Sinkfluggeschwindigkeit, die niedriger als 10 fps ist, ferner den Schritt des Betreibens des Luftfahrzeugs bei oder unter einer zweiten Sinkfluggeschwindigkeit von 9,8 fps umfasst.

**10.** Verfahren nach Anspruch 8, wobei der Schritt des Betreibens des Luftfahrzeugs bei einer zweiten Sinkfluggeschwindigkeit, die niedriger als 10 fps ist, ferner den Schritt des Betreibens des Luftfahrzeugs bei oder unter einer zweiten Sinkfluggeschwindigkeit von 9,6 fps umfasst.

**11.** Verfahren nach Anspruch 8, wobei der Schritt des Betreibens des Luftfahrzeugs bei einer zweiten Sinkfluggeschwindigkeit, die niedriger als 10 fps ist, die folgenden Schritte umfasst:

a) Messen und Aufzeichnen der Vertikalgeschwindigkeit des Luftfahrzeug bei Erstkontakt des Luftfahrzeugs mit dem Boden bei einem Landeereignis;
b) Bestimmen, ob die Vertikalgeschwindigkeit eine vorbestimmte Schwelle überschreitet;
c) Überprüfen des Luftfahrzeugs dann, wenn die Vertikalgeschwindigkeit eine vorbestimmte Schwelle überschreitet, vor Wiederaufnahme des Flugbetriebs.

**12.** Verfahren zum Betreiben eines Luftfahrzeug (1), wobei das Luftfahrzeug ein erstes maximales Landegewicht basierend auf einer ersten maximalen Sinkfluggeschwindigkeit aufweist, wobei die erste maximale Sinkfluggeschwindigkeit durch eine Regulierungsbehörde bestimmt wird, wobei das Luftfahrzeug Fahrwerke aufweist, jedes Fahrwerk eine Teleskopstrebe (9) umfasst, die zu Extension und Kompression fähig ist, die Fahrwerkstrebe einen Rumpfabschnitt, der fest am Rumpf des Luftfahrzeugs bleibt, wenn das Fahrwerk zum Landen ausgefahren wird, und einen Reifenabschnitt (13) umfasst, der zu Bewegung bei einer anderen Geschwindigkeit in Bezug auf den Rumpfabschnitt fähig ist, wobei das Verfahren die folgenden Schritte umfasst:

Messen und Aufzeichnen der Sinkfluggeschwindigkeiten des Luftfahrzeugs bei Erstkontakt des Luftfahrzeugs mit dem Boden bei Landeereignissen;
Bestimmen, ob eine gemessene Sinkfluggeschwindigkeit des Luftfahrzeugs bei Erstkontakt mit dem Boden eine vorbestimmte Schwelle überschreitet;
Überprüfen des Luftfahrzeugs bei Bestimmen, ob die gemessene Sinkfluggeschwindigkeit die vorbestimmte Schwelle überschreitet;
Betreiben des Luftfahrzeugs bei einer zweiten Sinkfluggeschwindigkeit, die niedriger als die erste Sinkfluggeschwindigkeit ist; und
Betreiben des Luftfahrzeugs bei einem zweiten maximalen Landegewicht, das größer als das erste maximale Landegewicht ist, basierend auf der zweiten Sinkfluggeschwindigkeit;
**dadurch gekennzeichnet, dass** der Schritt des Messens von Vertikalgeschwindigkeiten des Luftfahrzeugs bei Erstkontakt des Luftfahrzeugs mit dem Boden bei Landeereignissen ferner die folgenden Schritte umfasst:

a) Bereitstellen eines ersten Beschleunigungsmessers auf dem Rumpfabschnitt der Strebe;
b) Bereitstellen eines zweiten Beschleunigungsmessers auf dem Reifenabschnitt der Strebe;
c) Messen der Beschleunigung des Rumpfabschnitts mit dem ersten Beschleunigungsmesser bei Landung des Luftfahrzeugs;
d) Messen der Beschleunigung des Reifenabschnitts mit dem zweiten Beschleunigungsmesser bei Landung des Luftfahrzeugs;
e) Vergleichen der Beschleunigung des Rumpfabschnitts mit der Beschleunigung des Reifenabschnitts;
f) Bestimmen der Sinkfluggeschwindigkeit des Rumpfabschnitts der Strebe bei Erstkontakt mit dem Boden.

**13.** Verfahren nach Anspruch 12, wobei das Luftfahrzeug Fahrwerke aufweist, jedes Fahrwerk eine Teleskopstrebe umfasst, die zu Extension und Kompression fähig ist, wobei der Schritt des Messens einer Vertikalgeschwindigkeit des Luftfahrzeugs bei Erstkontakt des Luftfahrzeugs mit dem Boden bei einem Landeereignis ferner die folgenden Schritte umfasst:

a) Messen der Extension der einen der Teleskopstreben vor Kontakt des jeweiligen Fahrwerks mit dem Boden;

b) Messen der Extension der einen Teleskopstrebe bei Erstkontakt des jeweiligen Fahrwerks mit dem Boden;

c) Messen des Ausmaßes von geänderter Extension der einen Teleskopstrebe in Bezug auf abgelaufene Zeit;

d) Bestimmen der Kompressionsrate der einen Teleskopstrebe;

e) Bestimmen der Sinkfluggeschwindigkeit des Luftfahrzeugabschnitts der einen Teleskopstrebe.

14. Verfahren nach Anspruch 12, wobei das Luftfahrzeug Fahrwerke aufweist, und der Schritt des Messens einer Sinkfluggeschwindigkeit des Luftfahrzeugs bei Erstkontakt mit dem Boden bei Landeereignissen ferner die folgenden Schritte umfasst:

a) Bereitstellen eines Entfernungsmesser am Rumpf des Luftfahrzeugs, wobei der Entfernungsmesser nach unten zum Boden gerichtet ist;

b) Messen der Entfernung des Luftfahrzeugs zum Boden im Zeitablauf, bevor das Fahrwerk Erstkontakt mit dem Boden herstellt;

c) Bestimmen, wann das Fahrwerk Erstkontakt mit dem Boden herstellt;

d) Bestimmen der Sinkfluggeschwindigkeit des Luftfahrzeugs bei Erstkontakt mit dem Boden durch das Fahrwerk.

15. Verfahren nach Anspruch 12, wobei das Luftfahrzeug ein Fahrwerke aufweist, und der Schritt des Messens einer Sinkfluggeschwindigkeit des Luftfahrzeugs bei Erstkontakt des Luftfahrzeugs mit dem Boden bei Landeereignissen ferner die folgenden Schritte umfasst:

a) Bereitstellen eines Beschleunigungsmessers am Rumpf des Luftfahrzeugs;

b) Messen der Beschleunigung des Luftfahrzeugrumpfs im Zeitablauf, bevor das Fahrwerk Erstkontakt mit dem Boden herstellt;

c) Bestimmen, wann das Fahrwerk Erstkontakt mit dem Boden herstellt;

d) Bestimmen der Sinkfluggeschwindigkeit des Luftfahrzeugs bei Erstkontakt mit dem Boden durch das Fahrwerk.

16. Verfahren nach Anspruch 12, wobei das Luftfahrzeug Fahrwerke aufweist, und der Schritt des Messens einer Sinkfluggeschwindigkeit des Luftfahrzeugs bei Erstkontakt mit dem Boden bei Landeereignissen ferner die folgenden Schritte umfasst:

a) Bereitstellen eines GPS (globales Positionsbestimmungssystem)-Empfängers im Luftfahrzeug;

b) Messen der Position des Luftfahrzeugrumpfs über dem Boden im Zeitablauf, bevor das Fahrwerk Erstkontakt mit dem Boden herstellt;

c) Bestimmen, wann das Fahrwerk Erstkontakt mit dem Boden herstellt;

d) Bestimmen der Sinkfluggeschwindigkeit des Luftfahrzeugs bei Erstkontakt mit dem Boden durch das Fahrwerk.

17. Vorrichtung zum Überwachen von Fahrwerken (9) eines Luftfahrzeugs (1) bei Erstkontakt des Fahrwerks mit dem Boden (3), so dass die maximale Gewichtsbeschränkung des Luftfahrzeugs erhöht werden kann, wobei jedes Fahrwerk eine Teleskopstrebe mit einem komprimierbaren Fluid umfasst, die Fahrwerkstrebe einen Rumpfabschnitt, der fest am Rumpf des Luftfahrzeugs bleibt, wenn das Fahrwerk zum Landen ausgefahren wird, und einen Reifenabschnitt umfasst, der zu Bewegung bei einer anderen Geschwindigkeit in Bezug auf den Rumpfabschnitt fähig ist,

**dadurch gekennzeichnet, dass** sie ferner umfasst:

a) einen ersten Beschleunigungsmesser, der ausgelegt ist, um am Rumpf des Luftfahrzeugs montiert zu werden;

b) einen zweiten Beschleunigungsmesser, der ausgelegt ist, um am Reifenabschnitt der Strebe montiert zu werden;

c) einen Prozessor mit einem ersten Eingang, der mit dem ersten Beschleunigungsmesser verbunden ist, und einem zweiten Eingang, der mit dem zweiten Beschleunigungsmesser verbunden ist, wobei der Prozessor konfiguriert ist zum:

Aufzeichnen der Beschleunigung des Rumpfabschnitts der Strebe, wie in Verwendung durch den ersten Beschleunigungsmesser gemessen, und der Beschleunigung des Reifenabschnitts der Strebe, wie in Verwendung durch den zweiten Beschleunigungsmesser gemessen, Vergleichen der Beschleunigung des Rumpfabschnitts mit der Beschleunigung des Reifenabschnitts und Bestimmen des Erstkontakts des Fahrwerks aus dem Vergleich.

18. Vorrichtung nach Anspruch 17, wobei der erste Beschleunigungsmesser ausgelegt ist, um am Rumpfabschnitt der Luftfahrzeugstrebe montiert zu werden.

19. Vorrichtung nach Anspruch 17, wobei der Prozessor zum Bestimmen der Sinkfluggeschwindigkeit des Rumpfabschnitts der Strebe bei Erstkontakt konfiguriert ist.

20. Vorrichtung nach Anspruch 19, wobei der Prozessor so konfiguriert ist, dass er bestimmt, ob die Sinkfluggeschwindigkeit eine vorbestimmte Schwelle überschreitet, und gegebenenfalls eine Anzeige bereitstellt, dass die Sinkfluggeschwindigkeit die vorbestimmte Schwelle überschreitet.

21. Vorrichtung nach Anspruch 17, ferner umfassend:

a) einen Drucksensor, der ausgelegt ist, um so angeordnet zu werden, dass er den Druck innerhalb der Strebe misst;
b) dass der Prozessor einen Eingang aufweist, der mit dem Drucksensor verbunden ist, wobei der Prozessor so konfiguriert ist, dass er aus dem Druck und den Beschleunigungen bestimmt, wann der Erstkontakt des Fahrwerks stattfindet.

22. Vorrichtung nach Anspruch 21, wobei der Prozessor so konfiguriert ist, dass er die Sinkfluggeschwindigkeit des Rumpfabschnitts der Strebe gegenüber der Beschleunigung des Reifenabschnitts der Strebe bestimmt.

**Revendications**

1. Procédé de fonctionnement d'un avion (1), l'avion ayant une première masse d'atterrissage maximale qui repose sur une première vitesse de descente maximale, ladite première vitesse de descente maximale étant déterminée par une Autorité de Réglementation, dans lequel l'avion possède un train d'atterrissage (9), chaque train d'atterrissage comprenant une barre télescopique qui peut être déployée et rétractée, la barre de train d'atterrissage comprenant une partie de fuselage, qui reste fixée sur un fuselage de l'avion lorsque le train d'atterrissage est déployé pour l'atterrissage, et une partie de pneumatique (13), qui peut se déplacer à une vitesse différente, par rapport à la partie de fuselage, le procédé comprenant les étapes qui consistent à :

obtenir des vitesses verticales de l'avion au moment du contact initial de l'avion avec le sol (3) lors des atterrissages ;
sur la base des vitesses verticales obtenues de l'avion lors du contact initial avec le sol, faire fonctionner l'avion à une seconde vitesse de descente maximale ou moins tout en mesurant et en enregistrant les vitesses verticales de l'avion lors du contact initial de l'avion avec le sol lors des atterrissages suivants, la seconde vitesse de descente maximale étant inférieure à la première vitesse de descente maximale ; et faire fonctionner l'avion à une seconde masse d'atterrissage maximale su la base de la seconde vitesse de descente maximale,
**caractérisé en ce que** l'étape de mesure des vitesses verticales de l'avion lors du contact initial de l'avion avec le sol lors des atterrissages comprend en outre les étapes qui consistent à :

a) prévoir un premier accéléromètre sur la partie de fuselage de la barre ;
b) prévoir un second accéléromètre sur la partie de pneumatique de la barre ;
c) mesurer l'accélération de la partie de fuselage à l'aide du premier accéléromètre lorsque l'avion atterrit ;
d) mesurer l'accélération de la partie de pneumatique à l'aide du second accéléromètre lorsque l'avion atterrit ;
e) comparer l'accélération de la partie de fuselage avec l'accélération de la partie de pneumatique ;
f) déterminer la vitesse de descente de la partie de fuselage de la barre, lors du contact initial avec le sol.

2. Procédé selon la revendication 1, dans lequel la seconde masse d'atterrissage maximale est supérieure à la première masse d'atterrissage maximale.

3. Procédé selon la revendication 1, dans lequel l'étape d'obtention des vitesses verticales de l'avion lors du contact initial de l'avion avec le sol lors des atterrissages comprend en outre l'étape de mesure et d'enregistrement des vitesses de descente de l'avion lors du contact initial de l'avion avec le sol, lors des atterrissages.

4. Procédé selon la revendication 1, dans lequel l'avion possède un train d'atterrissage, chaque train d'atterrissage comprenant une barre télescopique qui peut être déployée et rétractée, l'étape de mesure d'une vitesse verticale de l'avion lors du contact initial de l'avion avec le sol lors des atterrissages suivants comprenant en outre les étapes qui consistent à :

a) mesurer l'extension de l'une des barres télescopiques avant le contact du train d'atterrissage respectif avec le sol ;
b) la mesure de l'extension de ladite barre télescopique lors du premier contact du train d'atterrissage respectif avec le sol ;

c) la mesure de la quantité d'extension modifiée de la barre télescopique par rapport à une durée écoulée ;

d) la détermination du taux de compression de la barre télescopique ;

e) la détermination de la vitesse de descente de la partie d'avion de la barre télescopique.

5. Procédé selon la revendication 1, dans lequel l'avion possède un train d'atterrissage, l'étape de mesure d'une vitesse verticale de l'avion lors du contact initial avec le sol lors des atterrissages suivants comprenant en outre les étapes qui consistent à :

a) prévoir un télémètre sur le fuselage de l'avion, le télémètre étant dirigé vers le sol ;

b) mesurer la distance au sol de l'avion pendant une durée écoulée avant que le train d'atterrissage effectue un contact initial avec le sol ;

c) déterminer le moment auquel le train d'atterrissage effectue un contact initial avec le sol ;

d) déterminer la vitesse de descente de l'avion lors du contact initial du train d'atterrissage avec le sol.

6. Procédé selon la revendication 1, dans lequel l'avion possède un train d'atterrissage, l'étape de mesure d'une vitesse verticale de l'avion lors du contact initial avec le sol lors des atterrissages suivants comprenant en outre les étapes qui consistent à :

a) prévoir un accéléromètre sur le fuselage de l'avion ;

b) mesurer l'accélération du fuselage de l'avion pendant une durée écoulée avant que le train d'atterrissage effectue un contact initial avec le sol ;

c) déterminer le moment auquel le train d'atterrissage effectue un contact initial avec le sol ;

d) déterminer la vitesse de descente de l'avion au moment du contact initial du train d'atterrissage avec le sol.

7. Procédé selon la revendication 1, dans lequel l'avion possède un train d'atterrissage, l'étape de mesure de la vitesse verticale de l'avion lors du contact initial avec le sol lors des atterrissages suivants comprenant en outre les étapes qui consistent à :

a) prévoir un récepteur de système de positionnement global sur l'avion ;

b) mesurer la position du fuselage de l'avion au-dessus du sol pendant une durée écoulée avant que le train d'atterrissage effectue un contact initial avec le sol ;

c) déterminer le moment auquel le train d'atterrissage effectue un contact initial avec le sol ;

d) déterminer la vitesse de descente de l'avion au moment du contact initial du train d'atterrissage avec le sol.

8. Procédé selon la revendication 1, dans lequel la première vitesse de descente maximale est de 1,1 km/h.

9. Procédé selon la revendication 8, dans lequel l'étape de fonctionnement de l'avion à une seconde vitesse de descente qui est inférieure à 1,1 km/h comprend en outre l'étape de fonctionnement de l'avion à une seconde vitesse de descente de 10,75 km/h ou moins.

10. Procédé selon la revendication 8, dans lequel l'étape de fonctionnement de l'avion à une seconde vitesse de descente qui est inférieure à 10,9 km/h comprend en outre l'étape de fonctionnement de l'avion à une seconde vitesse de descente de 10,5 km/h ou moins.

11. Procédé selon la revendication 8, dans lequel l'étape de fonctionnement de l'avion à une seconde vitesse de descente qui est inférieure à 10,9 km/h comprend en outre les étapes qui consistent à :

a) mesurer et enregistrer la vitesse verticale de l'avion lors du contact initial de l'avion avec le sol lors d'un atterrissage ;

b) déterminer si la vitesse verticale dépasse un seuil prédéterminé ;

c) si la vitesse verticale dépasse un seuil prédéterminé, inspecter l'avion avant de reprendre les opérations de vol.

12. Procédé de fonctionnement d'un avion (1), l'avion ayant une première masse d'atterrissage maximale qui repose sur une première vitesse de descente maximale, ladite la première vitesse de descente maximale étant déterminée par une Autorité de Réglementation, dans lequel l'avion possède un train d'atterrissage, chaque train d'atterrissage comprenant une barre télescopique (9) qui peut être déployée et rétractée, la barre de train d'atterrissage comprenant une partie de fuselage, qui reste fixée sur un fuselage de l'avion lorsque le train d'atterrissage est déployé pour l'atterrissage, et une partie de pneumatique (13), qui peut se déplacer à une vitesse différente, par rapport à la partie de fuselage, le procédé comprenant les étapes qui consistent à :

mesurer et enregistrer les vitesses de descente de l'avion lors du contact initial de l'avion avec le sol, lors des atterrissages ;

déterminer si une vitesse de descente mesurée de l'avion lors du contact initial dépasse un seuil prédéterminé ;

inspecter l'avion, lorsqu'il est déterminé que la vitesse de descente mesurée dépasse le seuil prédéterminé ;

faire fonctionner l'avion à une seconde vitesse de descente qui est inférieure à la première vitesse de descente ; et

faire fonctionner l'avion à une seconde masse d'atterrissage maximale qui est supérieure à la première masse d'atterrissage maximale, sur la base de la seconde vitesse de descente ; **caractérisé en ce que** l'étape de mesure des vitesses verticales de l'avion lors du contact initial de l'avion avec le sol lors des atterrissages comprend en outre les étapes qui consistent à :

a) prévoir un premier accéléromètre sur la partie de fuselage de la barre ;
b) prévoir un second accéléromètre sur la partie de pneumatique de la barre ;
c) mesurer l'accélération de la partie de fuselage à l'aide du premier accéléromètre lorsque l'avion atterrit ;
d) mesurer l'accélération de la partie de pneumatique à l'aide du second accéléromètre lorsque l'avion atterrit ;
e) comparer l'accélération de la partie de fuselage avec l'accélération de la partie de pneumatique ;
f) déterminer la vitesse de descente de la partie de fuselage de la barre, lors du contact initial avec le sol.

13. Procédé selon la revendication 12, dans lequel l'avion possède un train d'atterrissage, chaque train d'atterrissage comprenant une barre télescopique qui peut être déployée et rétractée, l'étape de mesure d'une vitesse verticale de l'avion lors du contact initial de l'avion avec le sol lors des atterrissages suivants comprenant en outre les étapes qui consistent à :

a) mesurer l'extension de l'une des barres télescopiques avant le premier contact du train d'atterrissage respectif avec le sol ;
b) mesurer l'extension de ladite barre télescopique lors du contact initial du train d'atterrissage respectif avec le sol ;
c) mesurer la quantité d'extension modifiée de ladite barre télescopique par rapport à une durée écoulée ;
d) déterminer le taux de compression de ladite barre télescopique ;
e) déterminer la vitesse de descente de la partie d'avion de ladite barre télescopique.

14. Procédé selon la revendication 12, dans lequel l'avion possède un train d'atterrissage, l'étape de mesure de la vitesse verticale de l'avion lors du contact initial avec le sol lors des atterrissages suivants comprenant en outre les étapes qui consistent à :

a) prévoir un télémètre sur le fuselage de l'avion, le télémètre étant dirigé vers le sol ;
b) mesurer la distance au sol de l'avion pendant une durée écoulée avant que le train d'atterrissage effectue un contact initial avec le sol ;
c) déterminer le moment auquel le train d'atterrissage effectue un contact initial avec le sol ;
d) déterminer la vitesse de descente de l'avion lors du contact initial du train d'atterrissage avec le sol.

15. Procédé selon la revendication 12, dans lequel l'avion possède un train d'atterrissage, l'étape de mesure de la vitesse verticale de l'avion lors contact initial avec le sol lors des atterrissages suivants comprenant en outre les étapes qui consistent à :

a) prévoir un accéléromètre sur le fuselage de l'avion ;
b) mesurer l'accélération du fuselage de l'avion pendant une durée écoulée avant que le train d'atterrissage effectue le contact initial avec le sol ;
c) déterminer le moment auquel le train d'atterrissage effectue un contact initial avec le sol ;
d) déterminer la vitesse de descente de l'avion lors du contact initial du train d'atterrissage avec le sol.

16. Procédé selon la revendication 12, dans lequel l'avion possède un train d'atterrissage, l'étape de mesure de la vitesse verticale de l'avion lors du contact initial avec le sol lors des atterrissages suivants comprenant en outre les étapes qui consistent à :

a) prévoir un récepteur de système de positionnement global sur l'avion ;
b) mesurer la position du fuselage de l'avion au-dessus du sol pendant une durée écoulée avant que le train d'atterrissage effectue le contact initial avec le sol ;
c) déterminer le moment auquel le train d'atterrissage effectue un contact initial avec le sol ;
d) déterminer la vitesse de descente de l'avion lors contact initial du train d'atterrissage avec le sol.

17. Appareil destiné à contrôler le train d'atterrissage (9) d'un avion (1) lors d'un contact initial du train d'atterrissage avec le sol (3) de sorte que la limite de poids maximale de l'avion puisse être augmentée, chaque train d'atterrissage comprenant une barre télescopique remplie d'un fluide compressible, la barre de train d'atterrissage comprenant une partie de fuselage qui reste fixée sur le fuselage de l'avion lorsque le train d'atterrissage est déployé pour l'atterrissage, et une partie de pneumatique (13), qui peut se déplacer à une vitesse différente, par rapport à la partie de fuselage,
**caractérisé en ce qu'**il comprend en outre :

a) un premier accéléromètre adapté pour être monté sur le fuselage de l'avion ;
b) un second accéléromètre adapté pour être monté sur la partie de pneumatique de la barre ;
c) un processeur ayant une première entrée reliée au premier accéléromètre et une seconde entrée reliée au second accéléromètre, le processeur étant configuré pour enregistrer l'accélération de la partie de fuselage de la barre mesurée par le premier accéléromètre et l'accélération de la partie de pneumatique de la barre mesurée par le second accéléromètre, pour comparer l'accélération de la partie de fuselage avec l'accélération de la partie de pneumatique, et pour déterminer le contact initial du train d'atterrissage à partir de la comparaison.

18. Appareil selon la revendication 17, dans lequel le premier accéléromètre est adapté pour être monté sur la partie de fuselage de la barre de l'avion.

19. Appareil selon la revendication 17, dans lequel le processeur est configuré pour déterminer la vitesse de descente de la partie de fuselage de la barre lors du contact initial.

20. Appareil selon la revendication 19, dans lequel le processeur est configuré pour déterminer si la vitesse de descente dépasse un seuil prédéterminé, et, si c'est le cas, pour fournir une indication selon laquelle la vitesse de descente dépasse le seuil prédéterminé.

21. Appareil selon la revendication 17, comprenant en outre :

a) un capteur de pression adapté pour être placé de façon à mesurer la pression à l'intérieur de la barre ;
b) le processeur possède une entrée qui est reliée au capteur de pression, le processeur étant configuré pour déterminer, en fonction de la pression et des accélérations, le moment auquel le contact initial du train d'atterrissage se produit.

22. Appareil selon la revendication 21, dans lequel le processeur est configuré pour déterminer la vitesse de descente de la partie de fuselage de la barre par comparaison avec l'accélération de la partie de pneumatique de la barre.

FIG. 1

12 fps

1

9

**FIG. 2a**

3

4 fps

1

**FIG. 2b**

3

2 fps

1

3

**FIG. 2c**

EP 2 842 067 B1

| Table 2. Comparison of Landing Parameters by Aircraft Model, CVG Survey | | | | | | |
|---|---|---|---|---|---|---|
| | | Parameters | | | | |
| Aircraft Model | | Approach Speed (knots) | Closure Speed (knots) | Average Sink Speed (ft/sec) | Headwind (knots) | Crosswind (knots) |
| B-737 | Mean | 133 | 132 | **1.7** | 0.9 | -0.9 |
| | Std Dev | 8.33 | 8.39 | 0.85 | 1.96 | 1.42 |
| | Skewness | -0.033 | 0.060 | 1.678 | 0.069 | 0.241 |
| B-757 | Mean | 129 | 128 | **2.0** | 1.3 | -1.0 |
| | Std Dev | 5.30 | 5.98 | 0.97 | 1.77 | 1.83 |
| | Skewness | 0.497 | 0.199 | 1.624 | 0.591 | 0.118 |
| B-767 | Mean | 145 | 1.44 | **2.1** | 1.3 | -0.9 |
| | Std Dev | 4.58 | 5.4 | 1.05 | 2.00 | 2.02 |
| | Skewness | 0.238 | -0.718 | 0.286 | 0.764 | -0.277 |
| MD-90 | Mean | 141 | 141 | **2.2** | 0.4 | -0.1 |
| | Std Dev | 8.28 | 9.07 | 1.07 | 2.11 | 2.20 |
| | Skewness | 0.595 | 0.833 | 0.297 | 0.299 | -0.433 |
| Bombardier CRJ | Mean | 126 | 125 | **1.7** | 1.2 | -0.9 |
| | Std Dev | 13.87 | 13.96 | 0.836 | 1.60 | 2.17 |
| | Skewness | 0.059 | 0.029 | 0.815 | 0.627 | -0.020 |
| Dornier 328 Jet | Mean | 111 | 111 | **1.3** | 0.1 | -0.3 |
| | Std Dev | 16.33 | 16.07 | 0.57 | 1.20 | 2.33 |
| | Skewness | 0.796 | 0.783 | 0.398 | -1.105 | -0.308 |
| Embraer ERJ | Mean | 127 | 126 | **1.8** | 0.8 | -0.6 |
| | Std Dev | 12.56 | 11.76 | 0.729 | 1.80 | 2.93 |
| | Skewness | -0.823 | -0.987 | -0.288 | -1.528 | -1.047 |

# FIG. 3

| | Kinetic Energy Equation : $\frac{1}{2} mass \; x \; velocity^2$ | | | | | | | | | | | |
|---|---|---|---|---|---|---|---|---|---|---|---|---|
| | for use in determining MLW increase for : EMB145 - XR | | | | | | | | | | | |
| | a | b | c | d | e | f | g | h | i | j | k | l |
| | MTOW | MLW | 1 main gear | 1/2 mass | velocity | V squared | Kinetic Energy at 10 fps | per gear weight increase | MLW increase | Kinetic Energy at 6 fps | Kinetic Energy at 2 fps | KE @ 2fps as % of KE @ 10 fps |
| 1 | 53,131 | 44,092 | 22,046 | 11,023 | **10.0** | 100 | **1,102,300** | - | - | 396,828 | 44,092 | 4.00% |
| 2 | 53,131 | 44,987 | 22,494 | 11,247 | **9.9** | 98.01 | **1,102,300** | 448 | 895 | 404,885 | 44,987 | 4.08% |
| 3 | 53,131 | 45,910 | 22,955 | 11,478 | **9.8** | 96.04 | **1,102,300** | 909 | 1,818 | 413,190 | 45,910 | 4.16% |
| 4 | 53,131 | 46,862 | 23,431 | 11,715 | **9.7** | 94.09 | **1,102,300** | 1,385 | 2,770 | 421,754 | 46,862 | 4.25% |
| 5 | 53,131 | **47,843** | 23,921 | 11,961 | **9.6** | 92.16 | **1,102,300** | 1,875 | **3,751** | **430,586** | 47,843 | 4.34% |
| 6 | 53,131 | 48,855 | 24,428 | 12,214 | **9.5** | 90.25 | **1,102,300** | 2,382 | 4,763 | 439,699 | 48,855 | 4.43% |
| | Column "a" is the maximum take-off weight, at which the aircraft was originally certified | Column "b" is the proposed maximum landing weight, associated with reduced touch-down velocity | Column "c" is the amount of maximum landing weight experinced by 1 main gear | Column "d" is 1/2 of the maximum landing weight experinced by 1 main gear | Column "e" is the measured touch-down vertical velocity of the aircraft, as it comes into initial contact with the runway | Column "f" is the touch-down vertical velocity of the aircraft, squared | Column "g" is the Kinetic Energy limitation associated with the structural design of the aircraft, at a descent velocity of 10.0 fps | Column "h" is the amount of maximum landing weight increase, per each main landing gear | Column "i" is the amount of total maximum landing weight increase, associated with a reduced vertical touch-down velocity | Column "j" is the reduced Kinetic Energy value associated with the higher landing weights, coming into contact with the runway, at vertical touch-down velocities reduced to 6 fps | Column "k" is the reduced Kinetic Energy value associated with the higher landing weights, coming into contact with the runway, at vertical touch-down velocities reduced to 2 fps | Column "l" is the percentage of KE at MLW landing at 2fps compared to the assumed 10fps |

FIG. 4

FIG. 5a  FIG. 5b  FIG. 5c

| | | |
| --- | --- | --- |
| 23  21  1  24 | 21  1 | 21  1 |
| Dimension "x" 4.91 ft | Dimension "y" 4.83 ft | Dimension "z" 4.75 ft |
| 200 psi | 202 psi | 204 psi |
| 148° | 137° | 129° |

Seconds:  − 0.030   − 0.020   − 0.010   0.000   0.010   0.020   0.030

⟶ ELAPSED TIME

EP 2 842 067 B1

FIG. 6a   FIG. 6b   FIG. 6c

Software Program "Epsilon"

FIG. 7a

FIG. 7b

Software Program "Zeta"

"Within Limits" landing event
1.8 fps

"Proper flare" - 4 fps

12 fps

FIG. 8a

"Exceedance" landing event
6.1 fps

"Improper flare" - 8 fps

12 fps

FIG. 8b

# Apparatus – Block Diagram

| 17 – Rotation Sensor<br>Right Main<br>Landing Gear | **Computer 25** | 21 – Pressure Sensor<br>Right Main<br>Landing Gear |
|---|---|---|
| | Internal clock and calendar | |
| 17 – Rotation Sensor<br>Left Main<br>Landing Gear | Software Program "Alpha"<br>*initial touchdown determination*<br>*"pressure"* | 21 – Pressure Sensor<br>Left Main<br>Landing Gear |
| | Software Program "Beta"<br>*landing gear compression measured*<br>*against elapsed time*<br>*"pressure"* | |
| 17 – Rotation Sensor<br>Nose<br>Landing Gear | Software Program "Gamma"<br>*initial touchdown determination*<br>*"rotation"* | 21 – Pressure Sensor<br>Nose<br>Landing Gear |
| | Software Program "Delta"<br>*landing gear compression measured*<br>*against elapsed time*<br>*"rotation"* | 23 – Inclinometer<br>Aircraft Hull |
| **FIG. 9** | Software Program "Epsilon"<br>*aircraft hull angle*<br>*correction to horizontal*<br>*"inclinometer"* | 24 – Alternative VVG<br>Sensor:<br>• Range Finder<br>• Accelerometer<br>• GPS |
| | Software Program "Zeta"<br>*aircraft VVG exceedance*<br>*"Hard-Landing"* | |

EP 2 842 067 B1

# FIG. 10

## Method of Obtaining Relief from Limit Descent Velocity Assumptions

Compute "new" Maximum Landing Weight based upon "un-changed" Kinetic Energy value at "reduced" descent assumption:

Aircraft Sink-Speed Measuring "System" (installed onto aircraft)

Submit request to Regulatory Authority for relief from current limit descent velocity assumption, to a "To Be Determined" lower value based upon issuance of an Equivalent Level Of Safety or other qualifying approval document.

"System" Support Mechanism - documentation, processes, procedures and limitations for use including but not limited to:
Instructions for Continuing Airworthiness (Maintenance Instructions)
Approved Flight Manual Supplement covering VVG measuring System operation and limitations and procedures for operation with VVG measuring System being inoperative or deactivated.

Documentation of Justification Basis - for issuance of Equivalent Level Of Safety, Special Condition, Exemption, or other alternate means of compliance with regulatory requirements including but not limited to:
Review of historical basis of regulatory requirement
Advances in Technology and operating procedures since its inception including:
Visual Approach Slope Indicators,
Glideslope Systems,
Ground Proximity Warning Systems
Stabilized Approach Criteria Procedures
Safety enhancements resulting from:
Hard Landing Reports being made based on data rather than flight crew opinion
Ability to monitor the operational landing loads placed upon landing gear and the airframe - based on measured data.

# Method of Implementing
# Increased Maximum Landing Weight

Request Regulatory Authority Approval of the Approved Flight Manual Limitations Section for an increase in the aircraft Maximum Landing Weight based upon approval of the reduced "limit descent velocity assumption"

Upon receipt of Regulatory Authority Approval of Maximum Landing Weight Increase

Install Hardware / VVG Software System on Aircraft in accordance with Aircraft Manufacturer or Supplemental Type Certificate holder's instructions

Design Training for Flight Crews and obtain Regulatory Authority Approval on Training

Conduct required training for Flight Crews

Modify Airline's Documentation to reflect new Maximum Landing Weight

Subsequent to:
- Completion of training
- VVG System installation
- Documentation modified

*"Planning System"*

Implement Increased Maximum Landing Weight into Airline's Fuel Planning (ferry fuel) System

Implement Increased Maximum Landing Weight into Airline's Load Planning System

Send Notification to Flight Crews and Operations Control Center as Maintenance begins to activate VVG systems.

FIG. 11

EP 2 842 067 B1

# Required Operational Procedures
## After Aircraft Landing and Arrival to Gate
(crew reviews aircraft VVG "System" indications)

Flight Crew review of Sink-Speed Indicator

| NO INDICATIONS PRESENT: | No Flight Crew Actions Required | Aircraft to remain in service |

| VERTICAL VELOCITY THRESHOLD #1 EXCEEDED | Flight Crew makes entry into Aircraft Maintenance Log and notifies Maintenance Control |

| VERTICAL VELOCITY THRESHOLD #2 EXCEEDED | Flight Crew makes entry into Aircraft Maintenance Log and notifies Maintenance Control |

Aircraft removed from service, Maintenance Control will perform an inspection of the aircraft, to Threshold #2 Exceedence

Within a specified number of flight legs, Maintenance Control will perform an inspection of the aircraft, to Threshold #1 Exceedence

Is Damage Discovered?

YES — Aircraft is Repaired

NO — Maintenance Control release aircraft back into service

Maintenance will log entry of inspections and any repairs from Threshold #1 or #2 Exceedence.

Aircraft is returned to service

# FIG. 12

37

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006130984 A
- US 2003222795 A
- US 37121228 B, Harris
- US 6012001 A, Scully
- US 4979154 A, Brodeur
- US 7274310 B